# EUROPEAN PATENT SPECIFICATION

(11) **EP 4 304 926 B1**
(45) Date of publication and mention of the grant of the patent: **17.06.2026**
(21) Application number: 22711991.4
(22) Date of filing: 10.03.2022
(51) Int. Cl.: B63B 35/00, E02D 13/04, F03D 13/25, E02D 13/06, B63B 79/10

(54) **METHOD AND SYSTEM FOR CONTROLLING A POSITION AND/OR AN ORIENTATION OF AN ELONGATED STRUCTURE**
VERFAHREN UND SYSTEM ZUR STEUERUNG EINER POSITION UND/ODER EINER AUSRICHTUNG EINER LÄNGLICHEN STRUKTUR
PROCÉDÉ ET SYSTÈME DE COMMANDE D'UNE POSITION ET/OU D'UNE ORIENTATION D'UNE STRUCTURE ALLONGÉE

(30) Priority: 10.03.2021 NL 2027739
(43) Date of publication of application: 17.01.2024
(73) Proprietor: Delta Laboratories Holding B.V., 3089 JW Rotterdam (NL)
(72) Inventor: SCHIELE, DHR., André, 3089 JW Rotterdam (NL); LOPES, Gabriel, 3089 JW Rotterdam (NL); OOSTERLOO, Dabian, 3089 JW Rotterdam (NL)
(74) Representative: MERH-IP Matias Erny Reichl Hoffmann Patentanwälte PartG mbB
(86) International application number: PCT/EP2022/056256
(87) International publication number: WO 2022/189590

(56) References cited:
- EP-A1- 3 513 006
- EP-A1- 3 517 479
- EP-B1- 3 513 006
- WO-A1-2019/231329
- WO-A1-2020/145825
- WO-A1-2021/125943
- WO-A1-2021/245175
- US-A1- 2016 122 968
- US-A1- 2021 047 009
- WITTINGEN MARTIJN: "Offshore Wind Turbine Monopile Foundation Installation with a Dynamic Positioned Vessel", THESIS TU DELFT, 29 October 2018 (2018-10-29), pages 1 - 111, XP055875727

## Description

### TECHNICAL FIELD

The present disclosure relates to the general field of installation of structures on a seabed. In particular, the present disclosure relates to a method of controlling a position and/or an orientation of an elongated structure, such as a pile, in particular a pile to be placed into a water bottom formation, more in particular a monopile, connected via a gripper to a vessel. The present disclosure further relates to a system for controlling the position and/or orientation of such an elongated structure connected via a gripper to a vessel, and to a vessel comprising the system, as well as to a computer program product and a computer-readable medium. In particular, the present disclosure relates to a control system and method for floating installation of monopiles into a seabed.

### BACKGROUND

Presently there is significant activity in installation of structures on a seabed, in particular for wind turbine generators offshore. Constructions of foundations for wind turbine generators offshore involves installation of large tubular structures, such as piles or monopiles on the seabed, from vessels.

For pile installations on the seabed, it is a primary scope to install the pile on a pre-known and accurately matched absolute position in Earth Coordinates (for instance expressed in terms of its position in latitude, longitude and up, its verticality, or in any known terrestrial geodetic system such as WGS-84, ITRF or others, for example) on the seabed (denoted by X-Y here for simplicity). Moreover, it is a goal to install the pile with a requirement on its verticality. In most cases, a pile, according to the state of the art today, should be installed with a verticality tolerance not exceeding an offset of maximum 0,2 - 0,25 degrees in any direction from verticality in Earth Coordinates.

Monopiles subject to this field can be considered extremely large tubular (hollow) structures with diameters ranging from 5 up to 11-12 meters and with lengths of up to around 110 meters. Such piles can weigh in the order of 2000 metric Tons ("T") or more, like 1500-3500 T, and it is expected that piles will become larger in the future.

Pile installation may involve "floating" installation in which a monopile is lowered from a ship to a seabed. This is still rarely done in the industry. Presently, foundations such as monopiles are mainly installed by jack-up vessels, which are vessels fixed on the seabed, because floating installation is considered very difficult and potentially extremely dangerous. Jack-up based installations take much more time, which is why floating installations may still be preferable, provided that the present technical challenges can be overcome.

A falling pile on a vessel could cause catastrophic damage and easily lead to fatalities.

Considering floating installation, it is a further challenge that manipulation of a pile, due to the large inertias being involved, can have a significant impact on the operation of a vessel dynamic positioning system ("DP-system").

A number of monopile gripper-frames have been proposed by the industry, to control a pile and enable the installation of monopiles with such requirements.

When installing a pile from a floating vessel, a motion compensated pile gripper frame is necessary. Such a pile gripper frame will have a control system that will generate forces and motions that will impact the pile, but will also cause an external effect on the control system and actuators of an existing DP-system. The coupling of systems (for instance vessel, DP-system, pile gripper, pile and seabed) can lead to undesirable situations, for instance if a pile is being inserted into the seabed and therefore experiences a certain high coupling stiffness with the seabed, while the DP-system may be for example in a high precision mode (characterized by the fact that the DP-system is configured to keep the vessel tightly at a specified location). Then, the combined coupling between vessel, motion compensated pile gripper, pile and seabed can lead to undesired instabilities (for instance control instabilities) in the coupled dynamic system. Such instabilities can cause large position drifts and deviations in station keeping performance by the DP-system or the Pile Gripper or both, that can then hinder the pile installation operation and can lead to potentially dangerous situations (for instance leading to a falling pile). Time lag in the DP-system, which may exist between sending a command to it and receiving a measurable response of the vessel, is generally too large to be able to effectively use active control inputs to the DP-system for stabilizing an unstable situation. One possible mitigation of this problem may be to 'de-tune' the DP-system, for instance to make it less precise at such moments, to avoid such instabilities; however, such detuning may result in a significant loss of installation accuracy, such as for instance in pile placement and pile verticality.

Therefore, a method and a system are desired to improve operational safety and installation accuracy, also under a large amount of possible failure conditions.

Further, since jack-up vessels are fixed to the seabed, active motion compensation is not necessary. Recently, some parties have started developing motion compensated pile-grippers and associated installation methods in order to be able to install monopiles from floating crane-vessels without the need for jacking-systems and/or mooring or anchoring the vessel on the sea-bed; e.g. WO 2019/172572 A2, NL 2020536 B1, WO 2019/125172 A2, NL 2022205 B1, NL 2018066 B1, EP 3517479 A1. These systems are based on "motion compensation" by means of positioning a movable pile-gripper on deck in mostly 2 degrees of freedom (X-Y). The vertical Z-axis is kept free in order to allow the pile to travel vertically through the gripper. Typically, rollers are used to guide a pile in Z-direction passively. Such rollers are arranged in a circular fashion around a gripper that firmly grasps the pile in a "roller-box". The roller-box is then moved by the actuator system of the pile gripper in horizontal coordinates X, Y.

It is known to implement offshore motion compensation systems by a position control scheme in which a movable device is commanded based on a sensor signal stemming from a measurement of the vessel position and orientations. Such signals typically stem from inertial measurement systems (IMU's) and/or combinations of inertial with GPS measurements, sometimes called Motion Reference Units (MRU's) when combined. A variety of methods are known in the industry.

Some known concepts may make use of a separate pile measurement device, such as disclosed in e.g. AU 2012233801 A1, AU 2014281920 A1, EP 3382335 A1. WO 2019125172 A2 discloses the consideration that in general this could also be integrated with the control system, e.g. positioning of the pile-gripper in a horizontal plane with a possible input of vessel GPS data and pile measurement device.

Wittingen Martin: "Offshore Wind Turbine Monopile Foundation Installation with a Dynamic Positioned Vessel" Thesis TU DELFT, 29 October 2018 describes installing a monopile with a dynamically positioned vessel. A vessel motion compensated pile gripper is used to maintain the upright position of the monpile and to decrease interaction forces between vessel and the monopile.

WO 2020/145825 A1 describes that in a vessel for installing a structure onto or into seabed, multiple actuators comprised by a dynamic positioning system and a structure positioning system are used for controlling a position and/or orientation of the structure.

US 2016/122968 A1 describes a pile measuring system suitable for determining parameter(s) of a pile during an installation of the pile. The pile measuring system comprises at least one positioning sensor and a parameter calculator. Each of the at least one positioning sensor is attached or attachable to a location on a sleeve and configured to measure position coordinates of the respective location on the sleeve.

US 2021/047009 A1 describes a pile holding system to be mounted on a deck of a vessel, e.g. for installation of a pile adapted to support an offshore wind turbine, which pile holding system is configured to support the pile in an upright position at a pile installation location next to the vessel.

WO 2019/231329 A1 describes an offshore wind turbine installation vessel comprising a crane, which crane is provided with a computerized crane control system.

WO 2021/125943 A1 describes a system for controlling a motion compensated pile guide for a floating vessel that comprises a pile guide for guiding a monopile in its longitudinal direction during driving the monopile into a seabed, an actuator for moving the pile guide in horizontal direction with respect to a vessel to which the pile guide is mounted, a control unit for controlling the actuator, which control unit is configured for compensating motion of the vessel to which the pile guide is mounted so as to maintain the horizontal position of the pile guide during driving a monopile into a seabed, a first sensor for determining an inclination angle of a monopile with respect to the vertical during driving the monopile into a seabed, and a second sensor for determining magnitude and direction of an actual force of a monopile onto the pile guide during driving the monopile into a seabed.

WO 2021/245175 A1 describes an installation facility for installing a pile (10) in a vertical orientation on a target pile position into a seabed and methods thereof.

EP 3513006 A1 describes a pile driver, configured to drive a pile into an underwater bed, comprising a floatable body with a pile guide configured to guide said pile in a downward direction, and an actuator that is fixed to the floatable body and that is configured to drive the pile from the floatable body into the underwater bed.

In the context of the present disclosure, a pile installation sequence may contain the following elements, as will be discussed later in more detail:
- "Pile Upending": Up-ending of the pile from horizontal to vertical position on and above deck with a pile clamping tool, e.g. as disclosed in CA 2892993 A1 and e.g. with an up-ending device according to WO 2021002750 A1. After up-ending, the pile is suspended on the crane, positioned next to the vessel and at least partially submerged into the water;
- "Pile Loading": Meaning the transfer (lift) of the pile from above deck to the installation location (up-ending) and then, in Earth Coordinates and next to the vessel, typically performed by a crane slew motion moving the pile towards the pile gripper; Then, the insertion of the pile into a pile gripper installed on or near deck-level; The pile gripper may then already be positioned approximately on or near the final installation location, which is achieved in combination also with positioning the vessel by means of the DP-system; The pile loading may also include the grasping of the pile with the pile gripper; During pile loading, the pile may be 'tracked' by the gripper, in order to align the gripper center axis with the pile. In embodiments of the disclosure, this operation may be performed for instance with force control in the pile gripper's actuator system, in order to allow changing the stiffness and damping of the gripper such that the forces resulting from the pile (which may be caused or influenced by external factors such as waves, wind, currents, or motions of the vessel or forces on the vessel from waves, wind and currents; in general, these factors may be said to relate to conditions of the pile and/or the vessel) on the gripper and vessel structures are minimized; During 'tracking' such stiffness and damping settings may be different, in order to ensure good tracking performance; "Pile Lowering": Lowering the pile to the seabed. In embodiments of the disclosure, this may be done for example with force control in the actuator system for changing the stiffness and damping of the elongated structure with respect to either the vessel-, gripper- or Earth coordinate frames;
- "Pile placement": finally placing the bottom section of the pile onto the seabed on or near the designated final location. In embodiments of the present disclosure, this may be done for example with force control in the actuator system for stiffness and damping control and for instance with a ramping-up motion control that compensates for the horizontal vessel and pile gripper motions relative to the seabed when the pile starts touching the seabed. During this step, the motion control may for example be scaled based on the inputs from a sensor or from other information on the operational process, such as to slowly ramp-up motion control during the transition from a crane-suspended pile to a bottom-fixed pile. For controlling the ramping up of the motion compensation, an additional sensor or measurement or indirect measurement may be used, such as for instance the load in the crane-hook. During final placement, a pile inclination control may for example be used to ensure accurate verticality of the pile. Such pile inclination control may be used on direct or indirect pile inclination measurements in, for example, vessel coordinates, a pile gripper coordinate frame or an Earth fixed coordinate frame;
- "Pile self-weight penetrating": the further lowering of the pile until it is no longer required to support the pile with the crane (at self-weight penetration depth) and up to removing the flanged pile up-ending tool (FPUT) from the pile, such as to release the top-section of the pile from its coupling with the crane; During this step, in embodiments of the disclosure, for instance motion compensation control may be used in combination with inclination control. Force control in the actuation system may for instance also be used in order to on-line regulate the coupling stiffness and/or damping between the pile, pile-gripper and vessel;
- "Pile balancing": After removing the up-ending clamp (FPUT), the pile stands next to the vessel on the seabed and is only coupled to the vessel via the pile gripper. The control system ensures that the pile will not fall (i.e., tip over) and that all external disturbances from for instance deviations of motions of the vessel or from external forces on the pile or the vessel are compensated. In embodiments of the disclosure, this step may for example involve force control in the actuator system for adjusting the stiffness and/or damping in any coordinate system, for instance in Earth Coordinate system, and may involve motion compensation control and additionally inclination control. Alternatively, instead of inclination control, also a special control method may be used that balances the combined masses of the pile and the vessel such, that the combined system always stays in an equilibrium, independent from the magnitudes and directions of external disturbances on the pile and/or vessel; During the end of this installation step, it is necessary to install a pile driver onto the pile for driving, such as e.g. disclosed in AU 2014281920 A1;
- "Pile Driving": Driving (or sometimes called 'hammering') the pile to insertion depth under motion compensation; During pile driving, in embodiments of the disclosure for instance force control in the actuator system may be used to modulate the stiffness and/or damping between the pile and the vessel such as to de-couple the pile from the vessel. Such de-coupling stiffness and damping may be set as a variable during pile driving, such as to continuously or occasionally adjust the stiffness and/or damping to optimally find a trade-off between accuracy and de-coupling. Typically, the stiffness would be reduced in the interface between pile and vessel, the deeper the pile is inserted into the seabed. This 'decouples' the pile and control of the pile from the DP-system and allows to keep the DP-system in a stiff setting.
- "Gripper retract": Releasing the pile from the pile gripper. First opening the rollerboxes that hold the pile in place in the gripper, then opening the gripper and under motion compensation control retract the gripper from the pile. In this phase, in embodiments of the disclosure, force control may be used, which typically would be made 'stiffer' when switching to 'tracking' the pile. Tracking control for tracking the pile is necessary after separation of the rollerboxes from the pile, in order to avoid collisions with the pile. A stiff stiffness setting in the actuators force control (which may alternatively be called Impedance-control or Admittance-control) will help to achieve good tracking performance.
- "Emergency stop": A mode in which an error in the system would lead to a 'safe stop' of the operation. In this mode, in embodiments of the disclosure the "star controller" (or combined vessel-monopile controller) may be activated, for example, in order to prevent the pile from falling when in pile-balancing mode.
- "Emergency recovery": is the activation of the "star controller" in embodiments of the disclosure, which balances the combined center of mass of vessel and pile, in order to stabilize the pile inclination with the position of the vessel. Emergency recovery mode can also be used as a safe-guarding under the potential complete failure of the DP-system;

Considering the above, herewith significant improvements are provided.

### SUMMARY

The invention is defined by the appended independent claims. Embodiments are set out in the dependent claims.

In an aspect, a method of controlling a position and/or an orientation of an elongated structure is provided.

The method is a method of controlling a position and/or an orientation of an elongated structure connected via a gripper to a vessel. The method comprises the steps of:
receiving force data indicative of an interaction force between the structure and the gripper; and
controlling a position and/or an orientation of the structure and the vessel, in particular controlling a position and/or orientation of the structure and/or the vessel with respect to each other. The step of controlling a position and/or an orientation of the structure and the vessel comprises controlling the position and/or the orientation of the structure and the vessel on the basis of the force data. As an example, the actuator system may be configured in an Impedance- or Admittance control architecture, to be able to render different stiffness and damping characteristics independently from the application of forces. Then a motion compensation control may provide input setpoints to such Impedance- or Admittance control system to compensate for the horizontal vessel motions. Then, an inclination control function may provide an input to the motion compensation control to ensure the accurate verticality of the pile. As such, variation/adaptation of the stiffness (and/or the damping) of the coupling may depend, possibly among others, on conditions of the vessel, the pile, or the gripper. Additionally or alternatively, variation/adaptation of the stiffness (and/or the damping) may depend on an operational phase in the installation process (an operational phase of placement of the pile into the water bottom formation).The elongated structure may be a pile, in particular a pile to be placed onto and/or into a water bottom formation. The pile may be a monopile.

The vessel may be, during at least part of the method, a floating vessel or a vessel fixed with respect to the water bottom formation such as being jacked-up. Also or alternatively the vessel may be floating with a limited degree of freedom such as being moored to the water bottom formation for example by anchors. The water bottom formation may be e.g. a seabed (including an ocean bottom), a lake-bottom or a river bed, etc..

The force data indicative of an interaction force between the structure and the gripper or between the gripper and the vessel may comprise force data from a force sensor configured to detect an interaction force between the structure and the gripper, and/or actuator operation data such as actuator current data, actuator torque data, e.g. actuator data from one or more sensors configured to detect one or more of actuator input current, torque, output force, output torque.

Herein, the orientation of the structure, e.g. a monopile, may comprise an inclination of the structure. The inclination of the structure may preferably be determined absolute, i.e. relative to the Earth Coordinates and/or gravity. An inclination of the structure may be determined relative to the vessel and/or gripper orientation. Thus obtained relative inclination data of the structure may be merged with absolute position and/or orientation data of the vessel and/or of the gripper to determine the absolute inclination data of the structure. This applies likewise, mutatis mutandis, with respect to the orientation of the vessel and/or of the gripper, relative to the structure and/or absolute, i.e. relative to the Earth Coordinates and/or gravity.

The method further comprises the steps of
determining at least one of a stiffness and a damping of a coupling between the vessel and the structure when connected via the gripper; and
dynamically adjusting the at least one of the stiffness and the damping of the coupling, based at least in part on the force data.

Controlling the position and/or the orientation of the structure and the vessel on the basis of the force data, rather than position data as customary, allows greater sensitivity in the control, and brings an advantage in particular in terms of response time, and it allows a greater degree of freedom in specifying control parameters and allows to define the coupling stiffness and damping. This will be set out in detail below.

The step of controlling a position and/or an orientation of the structure and the vessel may comprise controlling an actuator between the vessel and the gripper based on the force data. In particular this may comprise controlling the actuator to control the position and/or the orientation of the structure and the vessel.

Accordingly, variation/adaptation of the stiffness (or the damping) of the coupling may depend, possibly among others, on a condition of the gripper. Additionally or alternatively, variation/adaptation of the stiffness (and/or the damping) may depend on an operational phase in the installation process (an operational phase of placement of the pile into the water bottom formation).

By controlling the actuator on the basis of force data rather than on the basis of position data (including position difference data) alone, allows for improving adjustment in the control to specifications and/or tolerances of the actuator and/or the gripper. This may prevent risks and/or damage. Controlling the actuator may suffice to control the position and/or the orientation of the structure and the vessel. However, also or alternatively, controlling the position and/or the orientation of the structure and the vessel may comprise employing a dynamic position control system and/or a mooring line tensioning system of the vessel.

The step of controlling the actuator may comprise controlling a force and/or a torque of a drive of the actuator and/or controlling a relative position and/or movement of movable parts of the actuator. The method may comprise controlling a force and/or a torque of a drive of several actuators and/or controlling a relative position and/or movement of movable parts of several actuators; this may be either parallel or in series. As an example, a rotary actuator may be controlled in torque by the drive by proportionally controlling the drive or motor current. The input to such torque control may come from a force measurement and a force controller. The input to such force controller may come from the control system such as to configure the rotary actuator in an Impedance control scheme, such as to accurately render different stiffness and damping. Alternatively, with a hydraulic drive train, the pressure may be used similarly to the current in the example above.

Controlling a force and/or a torque of a drive of the actuator may allow or simplify comparing control values (e.g. set values and/or achieved values) with the force data.

In any of the methods, adjusting a position of at least part of the gripper relative to the vessel may adjust part of the structure; this may adjust a position of the structure as a whole, or, in particular if the structure has a fixed point, e.g. a pile resting in or on a water bottom formation, may achieve adjustment of the orientation of the structure about the fixed point.

Executing at least one method may comprise employing a force controller and/or a structure orientation controller, this may comprise (performing) one or multiple feedback loops. E.g. a force controller may regulate a force or torque in an actuator based on a measured torque or force in such actuator, in order to achieve the desired force or torque at the output of the actuator. This may ensure that several, preferably all, nonlinearities of the actuator can be compensated for, such as friction. Such desired force or torque may in one configuration be provided by an output of a gripper position controller which may comprise an actuator controller, which may regulate a position and/or orientation of the structure based on a measurement of such position and/or orientation of the structure, in order to achieve a desired position and/or orientation of the structure. As such, the structure position controller, in combination with a force controller, may act as an impedance controller, regulating the stiffness and or damping of the coupling by adjusting a feedback factor (e.g., gain) to the structure position controller, e.g. using variable gains. The structure position controller may receive its desired position and/or orientation from the inclination controller, which regulates the structure orientation, in particular: inclination, based on a structure inclination measurement in order to achieve a desired inclination in absolute Earth Coordinates which inclination may preferably be set to zero.

The method may comprise the further step of:
receiving structure data indicative of at least one of a position, an orientation and a movement of the structure,
then the step of controlling a position and/or an orientation of the structure and the vessel may also comprise controlling the position and/or the orientation of the structure and the vessel based on the structure data.

The step of receiving structure data may comprise receiving structure data indicative of at least one of a position, an orientation and a movement of the structure relative to the gripper and/or to the vessel. However, it is preferred that the step of receiving structure data comprises receiving structure data of at least one of a position, an orientation and a movement of the structure relative to a water bottom formation onto and/or into which the structure is to be placed. Such water bottom formation may be represented in Earth absolute Coordinates. In the former case relative control (such as the vessel and the structure with respect to each other) may be improved which may e.g. simplify maintaining control within set boundaries of the actuator operating space and/or detection space of a sensor. In the latter case accuracy of control of the position and/or orientation of the structure may be improved, which may benefit meeting installation tolerances and, also or alternatively, may benefit meeting safety tolerances and/or detecting early warning signals of potentially critical and/or ill-conditioned situations.

Likewise, the method may comprise the further step of:
receiving vessel data indicative of a position and/or a movement of the vessel,
then the step of controlling a position and/or an orientation of the structure and the vessel may also comprise controlling the position and/or the orientation of the structure and the vessel based on the vessel data.

As explained for the structure / structure data, the step of receiving vessel data may comprise receiving vessel data indicative of at least one of a position, an orientation and a movement of the vessel and the gripper and/or the structure relative to each other; it is, however, preferred that the step of receiving vessel data may comprise receiving vessel data indicative of at least one of a position, an orientation and a movement of the vessel is relative to a water bottom formation onto (and hence an Earth Reference Coordinate system) and/or into which the structure is to be placed.

Receiving the structure data indicative of at least one of a position, an orientation and a movement of the structure may comprise receiving one or more of inertial measurement sensor (IMU) data, movement reference unit (MRU) data, global navigation satellite system (GNSS) data, global positioning system (GPS) data, laser range data, light detection and ranging (LIDAR) data, sound navigation and ranging (SONAR) data, camera data, depth gauge data, USBL data, todd-wire data and pile inclination controller data. Any such data may be acquired directly on the structure or indirectly with techniques involving remote sensing, such as for example by means of cameras, lidars or radar.

Receiving the vessel data indicative of at least one of a position, an orientation and a movement of the vessel may comprise receiving data from one or more of an inertial measurement sensor (IMU), global navigation satellite system (GNSS), global positioning system (GPS) sensor, laser range sensor, light detection and ranging (LIDAR) system, sound navigation and ranging (SONAR) system, camera, depth gauge, USBL data, todd-wire data and data from the dynamic positioning control system, vessel thruster controller, mooring line tension sensor, etc..

The method may make use of Sensor Fusion, by means of known sensor fusion algorithms, such as Kalman Filters, Particle Filters, Extended Kalman Filters or other statistics based method, in order to calculate robust estimates of the vessel and/or structure position and/or orientation and/or movement data. In such Sensor Fusion, various measurements of the same physical quantity may be used as an input, in parallel, and the most robust and accurate output measurement would be provided on the output for further usage inside the control system.

The method may further comprise the step of:
receiving structure data indicative of at least one of a position, an orientation and a movement of the structure in Earth Coordinates and/or relative to a water bottom formation onto and/or into which the structure is to be placed, and/or the step of
receiving vessel data indicative of a position, orientation and/or a movement of the vessel, in particular a position and/or a movement of the vessel in Earth Coordinates and/or relative to a water bottom formation onto and/or into which the structure is to be placed.

Then the step of controlling a position and/or an orientation of the structure and the vessel may also comprise controlling the position and/or the orientation of the structure and the vessel with respect to Earth Coordinates and/or with respect to the water bottom formation.

Thus, the method allows determination and/or controlling the structure and/or the vessel with respect to absolute coordinates and/or relative coordinates to an absolute position, which may comprise a position and/or an orientation of the structure and/or the vessel. This may benefit meeting installation tolerances and, also or alternatively, may benefit meeting safety tolerances and/or detecting early warning signals of potentially critical and/or ill-conditioned situations. Such situations could affect desired and/or achievable response characteristics of a system performing the method; in particular, see below, adjusting stiffness and/or damping of a coupling between the vessel and the structure may be desired on the basis of the vessel data. Such adjustment of the stiffness and/or damping of the coupling between the vessel and the structure may be provided by a monopile position controller in the form of an impedance controller which may be achieved by adjusting one or more gains in the controller.

The method may further comprise receiving load data, **e.g.** crane load data, from a load sensor configured to detect a load on a hoisting system, **e.g.** a crane, supporting the structure, then the step of controlling a position and/or an orientation of the structure and the vessel may also comprise controlling the position and/or the orientation of the structure and the vessel based on the load data. For example, the load data may be used to adjust the gains of a motion compensation controller during the pile lowering operational phase.

As such, variation/adaptation of the stiffness (or the damping) of the aforementioned coupling may depend, possibly among others, on conditions of the hoisting system. Additionally or alternatively, variation/adaptation of the stiffness (and/or the damping) may depend on an operational phase in the installation process (an operational phase of placement of the pile into the water bottom formation).

The hoisting system may comprise a crane and the load data may comprise crane load data.

This may improve controlling and/or stabilizing the structure supported from the crane, in particular at or during establishing contact between the structure and a water bottom formation onto and/or into which the structure is to be installed. At the establishment of the contact, the load on the hoisting system and/or dynamical behavior of the structure tend to vary significantly over a short period of time and/or over a small position change compared to the installation procedure and/or compared to one or more of time constants, time constraints, spatial constraints, movement characteristics etc.

Controlling the position and/or the orientation of the structure and the vessel based on both on the basis of the force data and the load data may improve control during a transition between different configurations and dynamic behaviors, in particular from a hoisted configuration wherein the structure is supported by (in particular: being suspended from) the hoisting system, to an off-loaded configuration wherein the structure is, at least predominantly, supported by another structure separate from the gripper, vessel and hoisting system, in particular standing on the water bottom formation.

The load data may comprise load data from a load sensor configured to detect a load on the hoisting system, a pressure sensor e.g. in a hydraulic system, and/or swell compensation data from a swell compensation system which may comprise one or more sensors to detect a hoisting driver load and/or -torque.

The method may further comprise receiving configuration data indicative of a relative position and/or movement of one or more movable parts of the actuator, and/or
receiving vessel data indicative of a position, orientation and/or a movement of the vessel, in particular a position, orientation and/or a movement of the vessel relative to a water bottom formation onto and/or into which the structure is to be placed.

Then, the step of controlling a position and/or an orientation of the structure and the vessel may also comprise controlling the position and/or the orientation of the structure and the vessel based on the configuration data and/or the vessel data. This may be done in particular in case the configuration data are indicative of the relative position and/or movement of movable parts of the actuator being outside of a predetermined space and/or velocity range, and/or in case the vessel data are indicative of the vessel being positioned and/or moving outside of a predetermined space and/or velocity range. In order to apply for instance a motion to the vessel, an external force input to the DP-system may be used. Alternatively, an external position or orientation correction to the DP-system inputs may be used.

The step of receiving configuration data indicative of a relative position and/or movement of one or more movable parts of the actuator may comprise receiving configuration data from a configuration sensor of the actuator configured to detect a relative position and/or movement of one or more movable parts of the actuator. The configuration data indicative of the movement may include data indicative of movement changes, such as starting a movement, stopping a movement, velocity, acceleration / deceleration (e.g. first time derivative of velocity), rate of acceleration / deceleration (e.g. second time derivative of velocity), etc.

In any method embodiment disclosed herein the position and/or orientation of the structure and/or of the vessel may be determined with respect to Earth Coordinates and/or relative to at least part of a water bottom formation onto and/or into which the structure is to be installed. Alternatively, the position and/or orientation of the structure may be determined relative to the Vessel position and/or orientation or alternatively relative to the gripper structure position and/or orientation (e.g., the position of the structure may be determined relative to the vessel position, and/or the orientation of the structure may be determined relative to the vessel orientation). The preferred embodiment is to for example re-compute all measurements to be represented with respect to absolute Earth Coordinates.

Any method herein may comprise the step of: determining a position on or in a water bottom formation wherein the structure is to be placed and the step of controlling the position and/or the orientation of the structure and the vessel symmetrically about the position, and/or
the step of determining a center of mass and/or a center or inertia of an assembly comprising the structure and the vessel connected via the gripper, and controlling the position and/or the orientation of the structure and the vessel symmetrically about the center of mass and/or a center or inertia. In the embodiment of the 'star controller', such combined motion objective may be achieved.

Thus, drift-off of the combined system of vessel and structure may be prevented. In such method, the vessel may be moved with respect to the structure rather than the structure being moved with respect to the vessel. It is noted that the center of inertia of the assembly may be determined to varying amounts by friction and/or stability of the structure as it is placed onto and/or into (in particular: driven into) a water bottom formation. Controlling the position and/or the orientation of the structure and the vessel symmetrically about the center of mass and/or a center or inertia may be performed by a Combined Vessel-to-Monopile controller (VMPC), also called 'star controller'. Such VMPC may be arranged such that it can use the respective masses of the vessel and the structure to determine the center of mass and/or a center or inertia of the assembly to stabilize the combined dynamic system. Also or alternatively, the VMPC may be arranged such that it can use a given position on or in the water bottom formation to control the position and/or the orientation of the structure and the vessel symmetrically about the position. Also, or alternatively, the VMPC may be arranged such that it can use at least one of the shape, geometry orientation of the structure with respect to environmental aspects, such as one or more of wind, waves, currents, etc. on the vessel and the structure to control the position and/or the orientation of the structure and the vessel symmetrically about the give position. In other words, at least one of the position and orientation of the combined structure-vessel system may be controlled symmetrically about the given position based on at least one of the shape, geometry and orientation of the structure, and further based on environmental aspects, including for example wind, waves and/or currents.

In an example that is not encompassed by the claims but useful for understanding the invention, a method of controlling a position and/or an orientation of an elongated structure connected via a gripper to a vessel is provided which comprises the steps of: determining a coupling between the vessel and the structure and determining a stiffness and/or a damping of the coupling.

Then the method may further comprise the step of
adjusting the stiffness of the coupling from a first stiffness setting to a second, different, stiffness setting, and/or back, and/or
the step of adjusting the damping from first damping setting to a second, different damping setting, and/or back,
and preferably comprising adjusting the stiffness and/or the damping of the coupling to one or more stiffness settings in between the first and second stiffness settings and/or to one or more damping settings in between the first and second damping settings.

E.g. adjusting the coupling from a comparably high stiffness and/or high damping to a comparably low stiffness and/or low damping and/or back. The stiffness and damping may be adjusted together or separately.

By adjustment of the stiffness and/or damping of the coupling, the coupling may be accommodated to different situations. E.g., situations where relatively large excursions or relatively small excursions of one or more of the data about a particular value are (to be) expected and/or can be allowed or cannot be tolerated.

This allows dynamic control over the step of controlling a position and/or an orientation of the structure and the vessel, also where that comprises controlling the position and/or the orientation of the structure and the vessel on the basis of the force data and/or one or more of the data identified herein as suitable for such controlling of the position and/or orientation of the structure and the vessel, either or not with respect to each other, e.g. force data, structure data, vessel data, load data, configuration data, insertion data, and possibly for any one of these data whether absolute or relative.

Adjusting the stiffness and/or the damping of the coupling may be based on one or more of the data identified herein, e.g. force data, structure data, vessel data, load data, insertion data.

Also or alternatively any step of a method disclosed herein may allow and/or require human input, e.g. allowing human intervention; in particular adjusting the stiffness and/or the damping of the coupling may involve human input such as for determining a time and/or an extent of adjustment.

Such method of determining a coupling and adjusting the stiffness and/or damping may in particular comprise the step of receiving at least one of
load data indicative of a load on a hoisting system supporting the structure, e.g. crane load data from a crane, and
insertion data indicative of an insertion depth of the structure into a water bottom formation and/or indicative of a length of the structure protruding from the water bottom formation, and

the step of adjusting the stiffness of the coupling between the first stiffness setting and the second stiffness setting, and/or the step of adjusting the damping of the coupling between the first damping setting and the second damping setting,
preferably comprising adjusting the stiffness and/or the damping of the coupling to one or more respective settings in between the first and second respective settings, on the basis of at least the load data and/or the insertion data.

This allows adaptation of the control of the gripper, and any effect thereof, to variations in the configuration of the structure relative to the water bottom formation and/or the gripper and or the vessel. Examples of (receiving) load data have been indicated elsewhere herein. Insertion data may comprise e.g., one or more of length data and oscillation data of the structure such as resonance frequency data for longitudinal and/or transverse oscillations.

Any method herein may comprise the step of arranging the vessel in a body of water, comprising the further steps of supporting the structure from a hoisting system of the vessel, connecting the structure via the gripper to the vessel, in particular while the structure is supported by the hoisting system, placing the structure onto and/or or into a water bottom formation of the body of water and driving the structure into the water bottom formation, and disconnecting the structure from the gripper and/or from the vessel. The force data may be received from a force sensor during at least some of the time that the structure is connected via the gripper to the vessel.

This may further comprise the step of adjusting the stiffness and/or the damping of the coupling between the first setting and the second setting between one or more of these "further steps" and/or during execution of one or more of these "further steps". An adjustment between the first setting and the second setting may comprise adjusting the stiffness and/or the damping of the coupling to one or more settings in between the first and second settings, at least part of which may be substantially stepwise or substantially continuously.

In an example that is not encompassed by the claims but useful for understanding the invention, a method of controlling a position and/or an orientation of an elongated structure connected via a gripper to a vessel is provided which comprises the steps of:
receiving force data indicative of an interaction force between the structure and the gripper; and
controlling on the basis of the force data at least one of a relative position of the structure and the vessel, a relative orientation of the structure and the vessel, a position of the structure and/or of the vessel and orientation of the structure and/or of the vessel. The position and/or orientation of the structure and/or of the vessel may be determined with respect to Earth Coordinates and/or relative to at least part of a water bottom formation onto and/or into which the structure is to be installed. The structure may be a pile such as a monopile, for example.

In an aspect, associated with at least the preceding, herein is provided a system for controlling the position and/or orientation of an elongated structure connected via a gripper to a vessel, the system comprising:
a computer comprising a computer readable storage medium having computer readable program code embodied therewith, and at least a processor, preferably a microprocessor, coupled to the computer readable storage medium, wherein responsive to executing the computer readable program code, the processor is configured to perform executable operations comprising the steps of:
receiving force data from a force sensor configured to detect an interaction force between the structure and the gripper;
controlling based on the force data, a control system of the vessel and/or an actuator between the vessel and the gripper to control the position and/or the orientation of the structure and/or the vessel in particular controlling a position and/or orientation of the structure and the vessel with respect to each other;
determining at least one of a stiffness and a damping of a coupling between the vessel and the structure, when the gripper is mounted to the vessel and connects the elongated structure to the vessel; and
dynamically adjusting the at least one of the stiffness and the damping of the coupling, based at least in part on the force data.

The system further comprises a gripper mountable or mounted to a vessel for connecting with the vessel via the gripper an elongated structure, such as a pile, in particular a pile to be placed into a water bottom formation while gripped by the gripper.

The system may be configured to determine a coupling between the vessel and the structure, when the gripper is mounted to the vessel and connects the elongated structure to the vessel, and to determine a stiffness and/or a damping of the coupling, and the system may then be configured to adjust and/or allow adjustment of the stiffness and/or the damping of the coupling between a first setting of a comparably high stiffness and/or high damping to a second, different, setting of a comparably low stiffness and/or low damping, and preferably comprising adjusting the stiffness and/or the damping of the coupling to one or more settings in between the first and second settings.

The system may further comprise at least one of
a force sensor configured to detect an interaction force between the structure and the gripper,
a structure data sensor configured to detect at least one of a position, an orientation and a movement of the structure,
a vessel data sensor configured to detect at least one of a position, an orientation and a movement of the vessel,
a load sensor configured to detect a load on a hoisting system, e.g. a crane, supporting the structure.

In yet another aspect herewith is provided a vessel comprising the system described herein.

In yet another aspect herewith is provided a computer program product comprising instructions to cause the system described herein to execute the method steps of any one method embodiment described or indicated herein. In an associated aspect herewith is provided a computer-readable medium having stored thereon the computer program product.

### BRIEF DESCRIPTION OF THE DRAWINGS

The above-described aspects will hereafter be more explained with further details and benefits with reference to the drawings showing a number of embodiments by way of example.

In the Figures is shown:

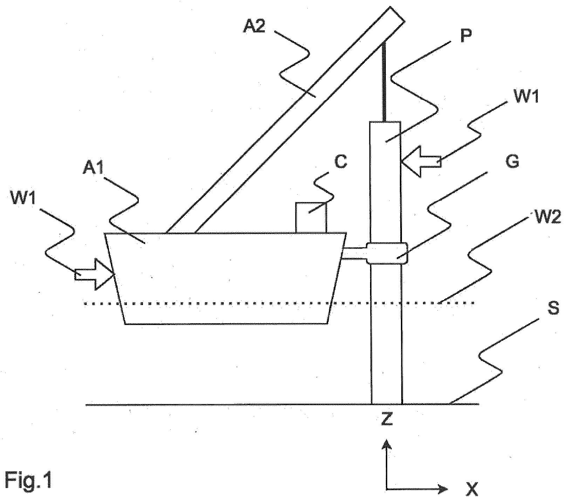

Figure 1: System Description, showing a vessel (A1), a monopile (P) and a seabed (S). Here and in the following the monopile (P) is used as a non-limiting example of an elongated structure. The vessel (A1) is equipped with a crane (A2) a gripper (G) and a control system (C). The vessel and monopile (P) are disturbed by wind (W1) and wave (W2) forces. The monopile is installed on the seabed (S). The monopile needs to be installed on the correct location (X,Y coordinate) in Earth Reference Frame and with a vertical alignment with Z and to a given height along Z.

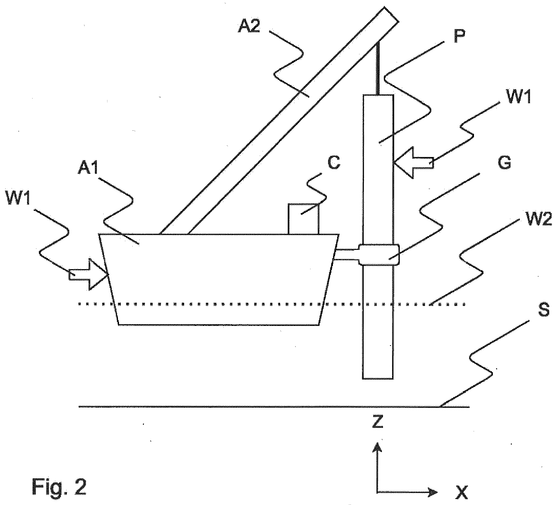

Figure 2: Operational Phase-I, in which the monopile (P) is supported only by crane and being inserted into the Gripper (G) and lowered towards the direction of the seabed.

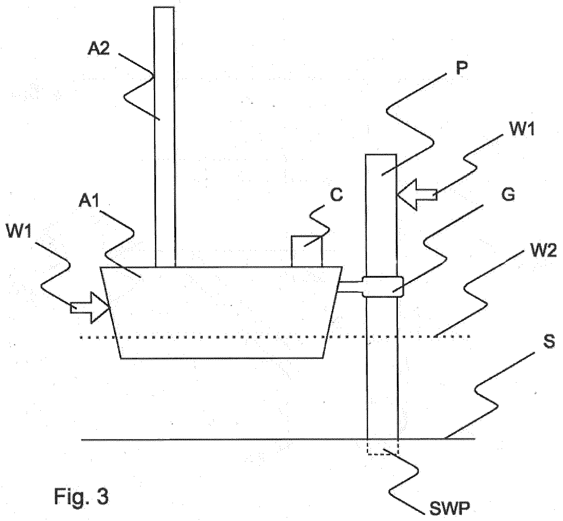

Figure 3: Operational Phase-II, in which the monopile (P) is fully supported on the ocean floor (S) by its own weight (self-weight penetration depth). The pile has entered the seabed up to its self-weight penetration depth (SWP) and is only supported by the vessel (A1) and gripper (G) after the crane has been detached.

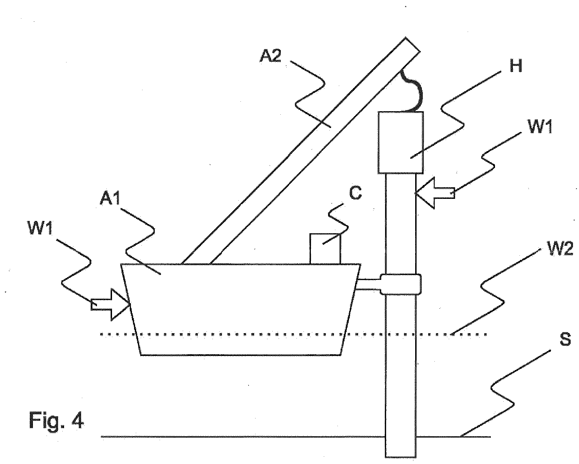

Figure 4 Operational Phase-III, in which a driving hammer (H) has been installed on top of the pile (P) in order to drive it into the ocean floor (S). The hammer (H) adds additional mass to the pile that may need to be compensated.

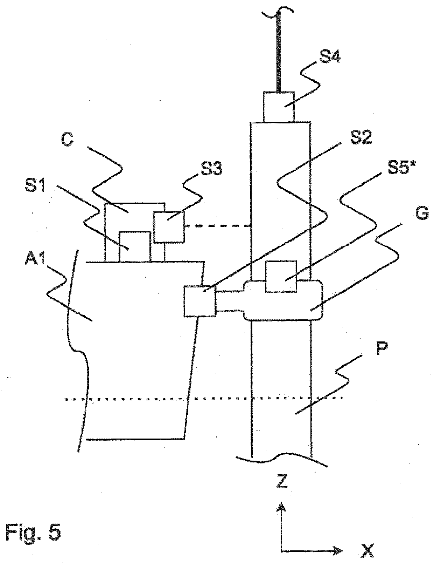

Figure 5: Sensor suite, comprising vessel absolute position sensor(s) (S1), gripper relative position and force sensor(s) (S2), monopile position and absolute inclination sensor(s) (S3), crane load sensor(s) (S4) and a monopile insertion depth measurement function (S5). Note that more, fewer and/or different sensors (not shown) may be used as desired and described herein elsewhere. The gripper relative position and force sensor S2 may be configured to output an indication of a relative position and a current force of the gripper. Also, the monopile position and absolute inclination sensor S3 may be realized as a relative sensor, which measures the monopile position and inclination relative to for instance the vessel or for instance to the gripper and then makes use of coordinate transformations to compute a position and inclination measurement in an absolute reference. Alternatively to locating S3 on the vessel, it may also be located on the gripper or on any other structure of the system. In any case, the absolute inclination sensor S3 may be configured for outputting an indication of an absolute inclination of the monopile. The crane load sensor S4 may be configured to output an indication of a crane load. The monopile insertion depth sensor S5 may be configured to output an indication of the insertion depth of the monopile into the seabed.

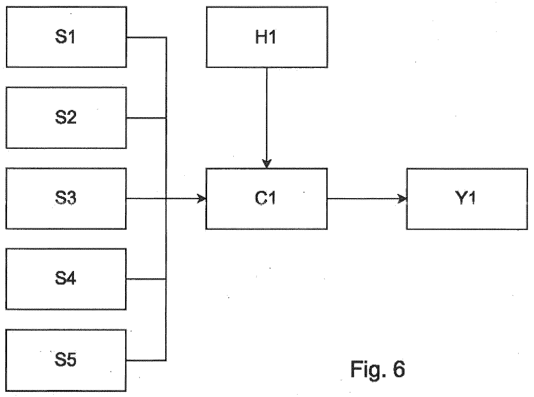

Figure 6: Control system. In the shown embodiment, controller (C1) uses the information of the vessel absolute position sensors (S1), positions and forces of the gripper (S2), the position and absolute inclination of the monopile (S3) the crane load sensors (S4) and the monopile depth (S5) to move the actuators (Y1) in a preferred way to stabilize the position of the monopile. More, fewer and/or different sensors may be used. Each sensor may consist of plural sensors, the outputs of which are fused by Sensor Fusion, in order to derive the most accurate and reliable measurement value for said sensor. An optional human user interface (H1) allows the controller to change between different modes of operation. The controller may also have a supervisory function that automatically performs such changes between modes of operation, such as the operation phases defined above, for example.

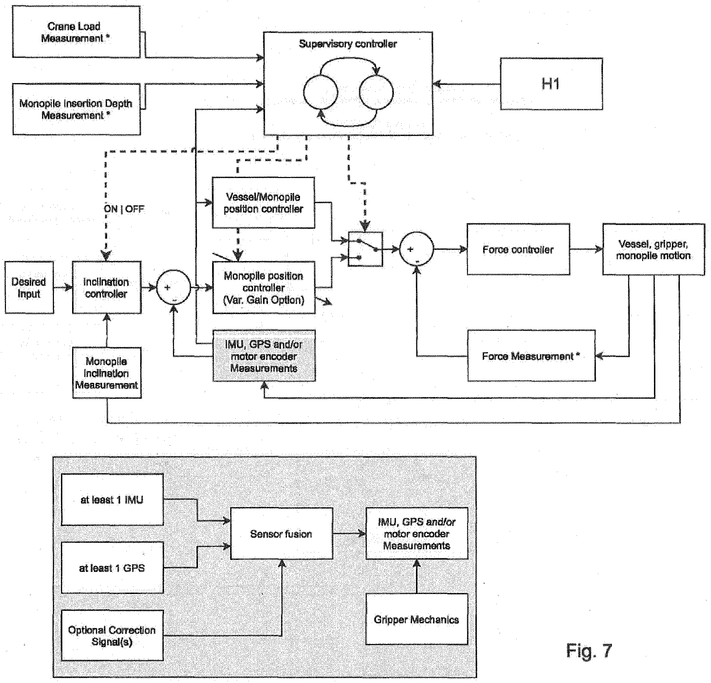

Figure 7: Preferred embodiment of the invention. In this embodiment, overall control system (C) is depicted in a 'nested control-loop' manner showing three nested feedback loops with one parallel loop that may replace the outer two ones. In general, the overall control system may at least have two nested feedback loops: An inner feedback loop, which may be a force control loop, for contributing to the regulation of stiffness and damping of a coupling to the monopile, and an outer feedback loop for motion compensation, as detailed elsewhere in this disclosure. The outer feedback loop may determine a required stiffness and or damping of the coupling, and provide appropriate set-points to the inner feedback loop, which then performs force control in accordance with these set-points. As a third feedback loop, enclosing the aforementioned two feedback loops may be provided for inclination control of the monopile.
   The inset (in grey) shows a more detailed typical embodiment for the system indicated in grey, the exemplary "IMU, GPS and/or motor encoder measurements" block comprises multiple sub-systems as shown, i.e. at least one IMU (Inertial Measurement Unit), at least one GPS receiver (Global Positioning System receiver), the option of one or more external correction signals, such as e.g. the MarineStar, PPP or RTK corrections. However, other sub-systems and/or combinations (not shown) may be provided. For reference, one sensor fusion block is shown providing input to the motion compensation controller.

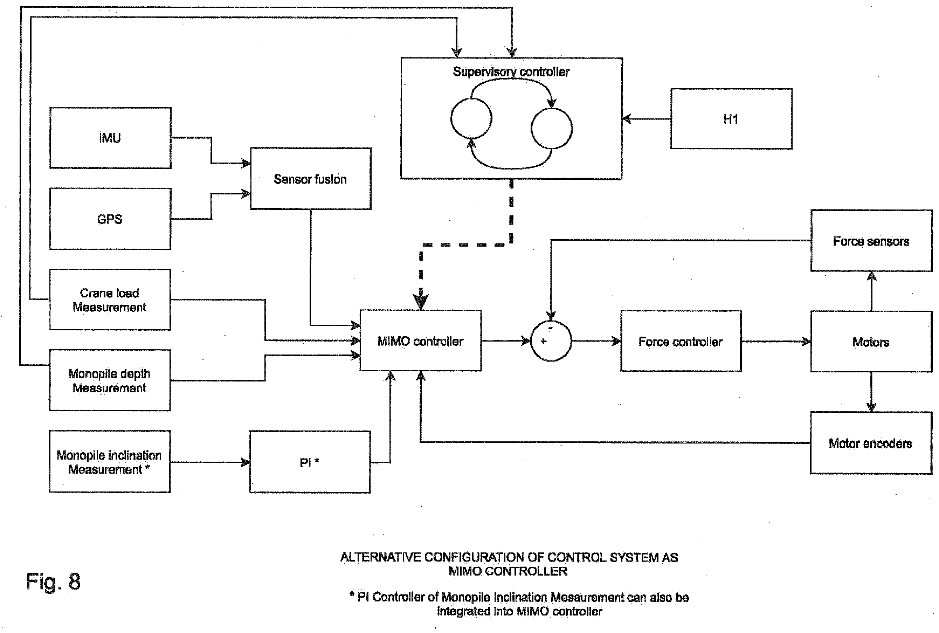

Figure 8: Control system, an embodiment according to this invention, shown in an alternative representation, replacing the nested individual sub-systems with a single MIMO controller (Multiple Input Multiple Output controller) being configured through a supervisory controller. The supervisory controller may be configured to change states inside the MIMO controller and/or to change control gains, variables or modes of operation. The Monopile inclination measurement and associated PI controller (Proportional-Integral controller) are shown "outside" the MIMO only for reference and could also be included inside the MIMO structure, such as any other of the sub-systems described above. In this example, the force controller (FC) delivers its control output signal to motors, e.g. motors of the gripper, which can be, e.g., electric, hydraulic and/or of hydro-motor type (with both, conventional as well as secondary control hydro-motors as an option).

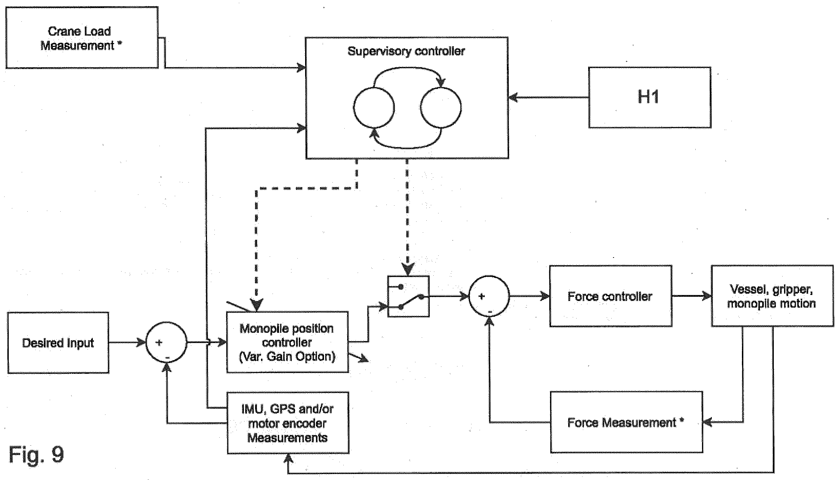

Figure 9: Configuration of the control-system during operational phase-I. The control system tracks and grasps the monopile with the gripper. Excessive movement of the pile is damped by the control-system by setting a stiffness. The Monopile position controller acts as an Impedance controller and the stiffness and/or damping may be changed, e.g. as a function of the crane-load, e.g. ramping up in stiffness with lowering the crane-load. Here, the supervisory controller may dynamically adjust the controller settings and gains and operational states.

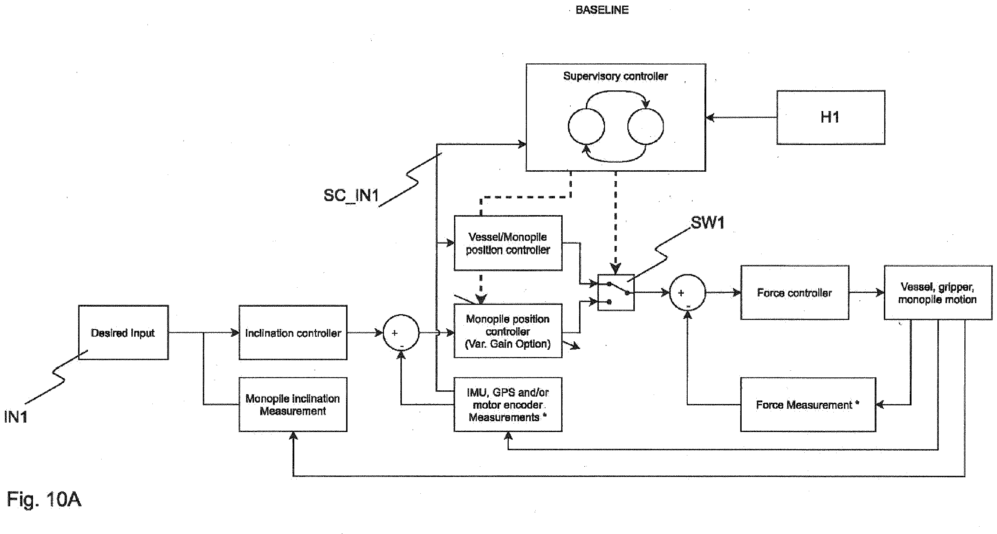

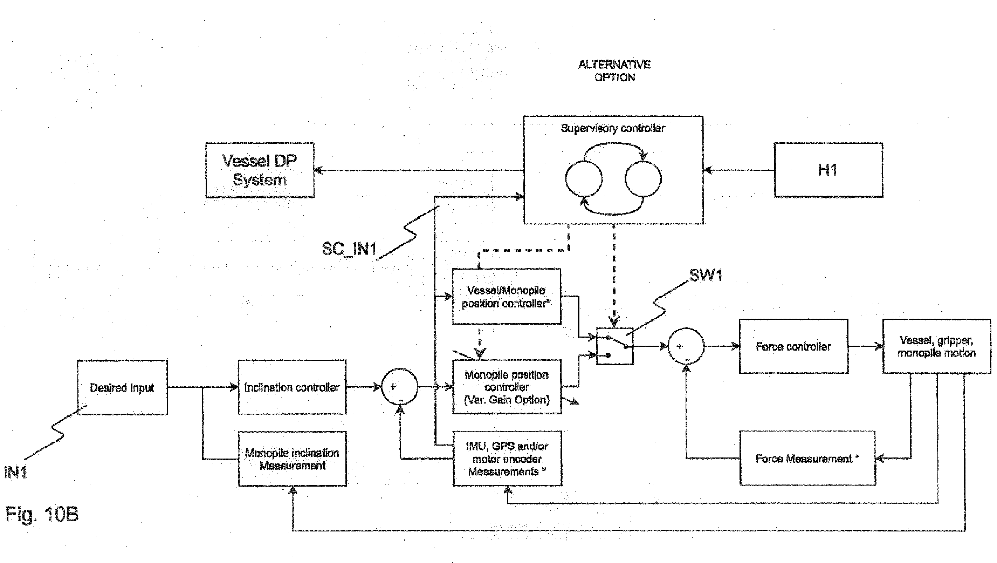

Figure 10A-10B: Configurations of the control-system during operational Phase-II in a baseline configuration (Fig. 10A) and shown as an alternative configuration (Fig. 10B), but other configurations may be provided. The control system uprights the monopile, in these embodiments with a stiff position control setting and with the inclination controller if the vessel is in a safe operation position. If the vessel is not within its safe operational position (e.g. reaching workspace limit or excessive DP-drift), then the controller stabilizes the vessel and monopile with the combined vessel-monopile controller (vessel-monopile position controller - VMPC) also called 'star controller'.

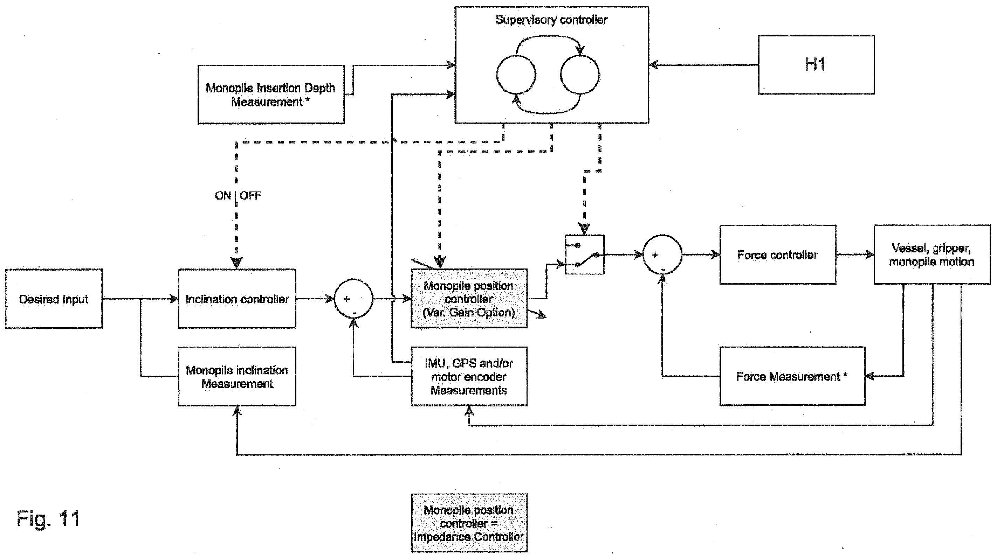

Figure 11: Configuration of the control system during operational Phase-III. During pile-driving, the control system keeps the monopile up-right and in this embodiment in addition reduces the stiffness and/or damping of the monopile position controller as a function of the monopile penetration depth in the seabed.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral, where helpful individualized with alphabetic suffixes.

Further, unless otherwise specified, terms like "detachable" and "removably connected" are intended to mean that respective parts may be disconnected essentially without damage or destruction of either part, e.g. excluding structures in which the parts are integral (e.g. welded or molded as one piece), but including structures in which parts are attached by or as mated connectors, fasteners, releasable self-fastening features, etc.

In the following, embodiments and variants of the system disclosed herein are described.

An embodiment comprises a control system, also nicknamed herein an "X-Control Box" and a hardware suite comprising computers (computing devices) and sensors, which allows a retro-fit on existing motion compensated pile-grippers to allow safe and accurate pile installations. The X-Control Box is used in combination also with external sensors, such as MRU's and IMU's and GPS/GNSS systems and custom sensors for pose measurement of monopiles. The combination of X-Control Box with such external sensors is denoted X-Control Suite. The X-Control Box and X-Control Suite enable the safe and high-precision installation of monopiles (as non-limiting examples of structures, in particular elongated structures)to the seabed from floating crane vessels.

A gripper to which the X-Control Suite is fitted, may require at least one or at least two degrees of motion in X-Y direction and may require one or more force-sensors to provide input signals to the control system. Also or alternatively other input signals such as motor currents may be used.

The X-Control Box, or the control system in general, makes use of an inner force-loop as primary control system (central force control system), which aims that (a) the stiffness and/or damping of the vessel-to-monopile interface (coupling) can be varied, for example such that a control instability is prevented or even made impossible so that it cannot occur, e.g. by prevention of over- or underdefined situations, and that (b) one or more motions of the pile gripper for motion compensation of waves and wind induced motions can take place, and possibly may take place independently from the coupling stiffness between vessel and monopile. This may decouple the motions and reactions of the DP-system from the motions of the pile gripper. The variation of the stiffness and/or damping may depend on external forces and/or external conditions, for example.

In general, for example by means of the inner force-loop, the control system computes a suitable coupling stiffness and/or damping between monopile and vessel, as an option being based on (possibly instantaneous) crane-load data (e.g. to stabilize the pile when hanging in the crane) or based on the magnitude of forces being measured between the gripper and the monopile (in general, based on external forces and/or external conditions).

The control system computes, as a preferred option, a suitable coupling stiffness and/or damping between monopile and vessel based on (possibly instantaneous) insertion depth data of the monopile into the seabed (to decouple the pile when held stiffly by seabed and to avoid DP-system instability). The coupling stiffness and/or damping may also or alternatively be computed based on other factors and/or data, e.g. based on the magnitude of forces stemming from interactions between pile and waves, from magnitude measurements of waves, from wind strength measurements or from measurements of the motions of the monopile and/or vessel including from measurement of their relative motion.

The control system can, in some examples, compute motion responses to use the combined vessel-monopile system to stabilize the pile upright even under conditions when a Dynamic Positioning system ("DP-system") of the vessel fails, drifts or is entirely absent.

Such system deviates from known systems in that the present-day focus of a pile gripper control system on only positioning tasks for motion compensation has a number of significant drawbacks that shall be explained here below. Moreover, the incapability of a vessel dynamic-positioning system to support pile-installation with a stiff precision setting while a pile is substantially inserted into the seabed has not been addressed before. Moreover, no present system makes use of force information during all operational steps and phases (e.g., the operation phases set out elsewhere in this disclosure) to constantly adjust the stiffness and damping parameters in the coupling between pile, gripper and vessel, which can lead to significant reductions in external forces on the pile gripper.

Various aspects of the disclosure are explained below. Some key problems with prior art and floating pile installations may be discerned:
Bump-forces when entering the pile, e.g. a monopile, with a crane-slew motion into a pile gripper can be significant and can risk damaging the pile gripper drive-system if it is position controlled (typically, position control systems will be designed to be 'stiff' in order to reach a good position tracking performance);
Removing energy out of a pile (e.g., monopile) by applying damping to it when suspended in a crane and inserted in a pile gripper (while still being subjected to wave and wind forces), and/or while lowering the pile to the seabed, until it rests on the seabed, is not possible with a purely position controlled gripper. Hence, large interface forces will be created between pile and gripper that can damage the gripper drive system and/or the pile itself;
When a pile (e.g., monopile) that is suspended from the crane is lowered to the seabed, it will, at a certain point, off-load the crane (in particular when the pile starts resting on the seabed). Now, if motion compensation (e.g., via the gripper) is simply 'switched on', it can lead to significant interface forces between the pile and the gripper/vessel if it is switched on too early because the gripper then creates a relative-motion with respect to the vessel and hence the crane, which is attached rigidly to the ship. On the other hand, it can lead to significant risk of pile inclinations that can lead to a falling pile if the motion-compensation is "switched on" too late;
When the pile rests on the seabed by its own weight and the crane is detached (e.g., to exchange tools), a position controller of a pile gripper can only detect pile inclinations once they occur, which then also can cause a drift of the vessel (by the pile pushing against the vessel/gripper). This can lead to a situation in which the motion compensated pile gripper can quickly reach its end-of-stroke limits of its active workspace. This can quickly lead to a very dangerous situation in which the pile cannot be controlled anymore and can hence create (possibly catastrophic) damage. This effect is potentially amplified by the occasional occurrence of dynamic-positioning drifts (DP-drifts), which are known to be able to occur at any given time and highly depend on the DP system and its configuration;

Even with high-precision DP-systems, drifts can regularly occur and can be in the range of multiple meters. This is why a typical workspace of a gripper is also in the range of multiple meters, for instance ± 3 or ± 4 meters in X and Y directions.

While balancing the pile when not attached to a crane, any DP drift will cause a position-controlled gripper to move towards one of its end of stroke limits quickly (e.g. within tens of seconds or some few, say 1-3, minutes). If any of the end-of-stroke limits is actually reached, the pile can easily fall since it becomes uncontrollable;
A DP-system is typically too slow to successfully react on the dynamics of a falling or an 'about-to-fall' (mono)pile (with time-constants in the order of a minute). Hence, even under the condition that a pile-gripper is control-wise integrated with a DP system, the DP-systems response alone is very unlikely to prevent an ill-conditioned pile from falling;
It is therefore very hard to successfully balance a (mono)pile with mass and inertia close to the mass and inertia of a vessel for extended periods of time, especially under non-favorable weather conditions involving winds and waves that are significantly non-zero;
Once a pile driver is installed on a pile, the combined mass will be even increased and the center of mass may be shifted, compared to the pile without the pile driver, and a DP-system will need to be arranged such as to be very precise to ensure good positioning behavior for station keeping;
When driving the pile to the seabed, the increasing stiffness between pile and seabed can lead to the occurrence of DP-system instabilities (in particular control instabilities through the external constraint), which can cause large drift-offs and oscillations of the DP system. This then can create significant forces on the pile, pile gripper and/or vessel. Such situations can lead to a non-controllable case in which a pile can fall in any direction and potentially create significant damage. Such instability is most likely to occur when the pile-to-soil stiffness increases. As an alternative one could argue that the DP-system precision setting can be relaxed. If this adjustment is done too early, however, it may cause drifts and may rather incline the monopile, and/or lead to stroke-ends of the gripper, which may lead to installation outside the tolerances in the best case. If this adjustment is done too late, instability likely has already occurred and a drop of the pile cannot be avoided, at least in most cases.

In particular with reference to the Figures, the following is noted.

Embodiments of the invention described in more detail below address one or more of the above-mentioned problems by implementing a force-control based approach on at least some of the drives of a pile gripper as a central element of the control system of the motion compensated gripper. This allows to directly detect interface forces between a pile and a gripper/vessel system and hence react more quickly on a potentially ill-conditioned situation or on a situation that could lead to ill-conditioning of the pile. Moreover, the force control approach leads to the feasibility of implementing an Impedance or Admittance control which can modify the coupling stiffness and/or damping. Moreover, an inclination control may be used to ensure keeping pile inclination during operations preferably zero or within a predefined tolerance around zero.

Moreover, in an embodiment, the control system and possibly, the sensor suite make then use of an external position control loop around the central force control system, in order to perform a desired motion compensation to eliminate effects of marine- and wind-induced position drifts of the vessel onto the gripper and hence the pile inserted into it. It is here where also the Impedance control may be achieved: The motion compensation control loop computes a desired stiffness and/or damping and provides a desired force to achieve such stiffness/damping to the inner force control loop. In addition, the provided force also accounts for performing adequate responses for the motion compensation control.

In addition to such (possibly nested) motion-compensation control, which may be based on sensing the vessel absolute position and rotations in Earth coordinates **e.g.** via IMU and GPS systems, an embodiment also includes a dedicated pile inclination controller which ensures, or at least is configured to ensure, that the monopile can be installed within the required vertical installation tolerances.

Additionally, an embodiment of the control system disclosed here includes a mode in which the pile and the vessel are balanced together, to recover from situations when a DP-system fails or ill-behaves or when through other reasons nearing a stroke-end.

The proposed unique and new combination of force and position control allows to actively adjust the stiffness and/or damping of the interface between the vessel/gripper and pile. Through a combination of a force-control approach in the drives with an external position control loop an impedance control may be realized. Consequently, the pile and vessel can be coupled or de-coupled with varying degrees of stiffness and damping (impedance), depending on the task and on the operational step. Non-limiting examples for different stiffness and/or damping settings depending on operational steps may be as follows.
- When the pile is suspended in the crane, prior to reaching the ocean floor ("pile lowering"), a 'softness' (low stiffness) and/or active 'damping' can be used in the control system to mitigate excessive forces, possibly at some expense of positioning accuracy;
- When the pile reaches into the soil of the seabed and starts stabilizing on (and/or partly in) the soil by its own weight ("Pile self-weight penetrating"), the stiffness and damping can be adjusted (preferably: adjusted online), such as to stabilize the pile;
- Once the crane has partly offloaded the pile, measurement information on the crane-load may allow to configure the control system such as to slowly ramp-up or ramp-down at least part of the motion compensation control (and possibly one or both of stiffness and damping), possibly depending on the degree to which the pile is already supported on and/or in the ocean-floor, leading to less force exertion and to a minimum of conflicting (attempted) relative motions between vessel, crane-/hook, pile-gripper and monopile;

When the pile is fully self-supported ("pile balancing"), the control system may quickly detect any force deviations within its force control system, may use the sensor data from a number of position and/or orientation measurement sensors related to, e.g. expressed in, Earth absolute frame to compute an optimal motion compensation and preferably at the same time ensure that the pile-inclination is maintained. This allows adjusting, in particular: minimizing magnitude of forces in the system, preferably at all times. Pile inclination may be derived from a measurement and it may be fed on-line into the control system in real-time (e.g. associated with or even at sample-rate of the control system).

In a preferred embodiment, if an excessive DP-drift event occurs that the pile gripper controller cannot reject by these means, an optional dedicated "combined vessel-monopile controller" is enabled, for example by a supervisory-control system. The combined vessel-monopile controller (or control) may account for and/or use then the mass of the (mono)pile to influence the vessel position and help the DP system to recover. This optional controller can also be able to stabilize the pile/vessel system over extended periods of time under a situation where the DP system is partially or entirely non-functional or absent, for instance during pile balancing. In this way, the system can counter-act effectively DP drift-offs and offers a safe and robust solution that can prevent pile ill-conditioning. At the same time, under nominal operation, the system may ensure a highly accurate pile inclination, since the pile inclination is actively used in the control system and therefore may be achieved within the tolerances required by the industry.

In a later phase, when the pile is driven to the seabed ("pile driving"), sensor data from the insertion depth of the monopile may allow or may be used to change the stiffness and/or damping between the vessel/gripper and (mono)pile by changing a mechanical impedance of the gripper system. With progression of the pile into the seabed, the system can slowly and continuously lower the stiffness and/or damping to slowly de-couple the pile from the vessel with progressing insertion depth. This prevents the onset of DP-instability to occur even if a high-precision setting is chosen for station-keeping, which is preferable also for the entire operation. Adjustment of a mechanical coupling impedance allows to safely install piles at a large range of weather conditions.

In a last phase, when the pile is fully inserted to insertion depth ("Gripper retract"), and when the gripper needs to be opened, the vessel will be fully de-coupled from the pile. However, in order to prevent damage to the pile gripper (e.g. from excessive motions of the vessel due to waves) the priority can be transferred back in the present control-system to favor better motion compensation, with a stiffer actuator setting. This enables to then minimize relative motions between gripper and pile and enables or simplifies a safe and failure-free extraction of the gripper from the pile.

Figure 1, shows a system description for reference. A vessel (A1) floating on water is equipped with a crane (A2) a gripper (G) and a control system (C). The gripper (G) holds a monopile (P). The vessel and monopile (P) are disturbed by wind (W1) and wave (W2) forces. The monopile is installed on the seabed (S). The monopile needs to be installed on the correct location (X,Y coordinate) in Earth Reference Frame and with a vertical alignment with Z.

The monopile (P) needs to be installed on the exact X,Y location in Earth Coordinates and is installed by the Vessel (A1), Crane (A2) and Pile Gripper (G) simultaneously during a number of principal installation phases.

In a first phase, the monopile (P) is suspended on the crane prior to lowering it (P) on the seabed. This phase includes all transitions from a free-hanging pile that protrudes above water, to the pile protruding inside the water-line, to the pile entering the gripper and up to the pile being fully grasped by the gripper, which typically has some opening doors (not shown here for simplicity). Typically a pile would be inserted into a gripper by a slewing motion of a crane and by then closing and latching large circumferential doors with roller-boxes and/or other gripper portions. During this insertion, the pile position may be tracked actively by the pile gripper to maintain as little as possible relative motion between the pile gripper and the pile.

The gripper can then be moved in the horizontal direction, actively, by a corresponding actuator and drive-system in 1 or 2 degrees of freedom, denoted X and Y for simplicity;

The vertical direction Z is usually passive and the pile can freely and passively move along this axis along some rollers.

Figure 2 indicates an Operational Phase-I ("pile loading", "pile lowering"), in which the monopile (P) is supported only by the crane A2 and being inserted into the Gripper (G).

Figure 1 indicates an Operational Phase-II, in which the monopile (P) is fully supported on the seabed, or: "ocean floor", (S) by its own weight ("pile balancing"). The pile has entered the seabed up to its self-weight penetration depth (SWP) and is only supported by the vessel (A1) and gripper (G).

Figure 4 indicates an Operational Phase-III, in which a driving hammer (H) has been installed on top of the pile (P) in order to drive it into the ocean floor (S) ("pile driving"). The hammer (H) adds additional mass to the pile that needs to be compensated.

Note that here, a (mono)pile is used for explanatory purposes but the same phases and issues apply for (installation of) any other generally relatively long and thin (i.e., elongated) structure or may equally apply to the installation of other bottom fixed structures.

During Phase-I (Figure 2) one challenging part of an operation is the insertion of the pile into the gripper (G) ("pile loading") and another challenging part is to lower the pile down to the seabed (S) ("pile lowering" and "pile self-weight penetrating").

In Phase-II (Figure 3) of a typical operation, the pile (P) is already lowered fully to the seabed and the crane is disconnected. In this case, the pile (P) is, apart from the ocean floor (S), only supported by the Vessel (A1) and Gripper (G) and needs to be balanced without the connection of a crane (A2) ("pile balancing"). A crane is typically disconnected to exchange tools, from a pile up-ending aid to a pile driver.

To transition from Phase-I to Phase-II is challenging, since in Phase-I, prior to setting down the pile on the seabed, no motion compensation can be used (the gripper G moves together with the vessel and crane), whereas after the pile touches the seabed, active motion compensation has to be used in order to balance the pile (P) and prevent it from falling (i.e., tipping over) and to compensate for the relative changes in X and Y positions of the vessel with respect to the seabed.

The pile (P) lowers into the seabed in Phase-I up to its self-weight penetration depth (SWP), which is the insertion depth until which the pile sinks due to its own weight and which depends on the ocean floor and mass and geometry of the pile.

In the third operational phase Phase-III (Figure 4), a pile driver, or hammer (H) is installed on top of the pile (P) in order to allow driving the pile to its final installation depth into the seabed (S).

The connection between the Hammer (H) and the Crane (A2) needs to be kept loose, in order to allow the hammer (H) to follow the pile passively (P) (in -Z direction) while driving the pile.

A major challenge of this operational Phase-III is the fact that a high-gain setting on a dynamic positioning system of the vessel (A1) can lead to control instability of the connected system of vessel (A1), gripper (G), pile (P) and Hammer (H) when the stiffness between pile (P) and seabed (S) reaches a certain value (resembling a moored vessel).

Installing a monopile (P) on the seabed (S) is challenging due to wave (W1) and wind (W2) disturbances acting on the vessel (A1) and the monopile during all phases. When the monopile is sitting on the seabed without crane support (or without sufficient penetration depth into the seabed) it is unstable and can fall.

When the vessel (A1) is not moored and not jacked up it can drift due to the forces of the monopile (P) acting on the vessel (A1). This can result in the monopile falling.

When the vessel (A1) makes use of a dynamic-positioning system (DP-system), then a coupling between the vessel (A1) and the seabed (S) through the pile (P) can cause instability in Phase-III of the operation, or else, when in Phases-I or Phase-II of the operation, can cause drifts of the vessel (A1), gripper (G) and pile (P) assembly which can cause to not install the pile on the accurate X,Y location, and/or can cause the pile to incline (possibly causing the pile to fall).

The mode of operation of a DP-system is considered known to a reader skilled in the art of offshore operations. A DP-system allows to position a vessel with adjustable thrusters to compensate for vessel position-drift to certain extent and to perform station keeping above a work-site. It acts mainly on low-frequency disturbances, such as currents and long-frequency changes in ocean and wind environment. However, each DP-system has a watch-circle within which it does drift around its setpoint. Large drifts have been observed that can protrude outside a regular watch-circle involving deviations up to tens of meters in non-nominal cases.

This disclosure predominantly addresses a control system (C) and an associated sensor and measurement suite (S1 - S5) (Figure 5) that can interface with a mechanical realization of a pile gripper (G) that is capable to perform at least a horizontal motion, relative to the vessel (A1), in X-Y direction. It is a task of the control system (C) to stabilize the monopile upright when not supported by the crane and in some embodiments to prevent the vessel from drifting in case of an absence of a DP-system or in case of a too slowly reacting DP-system. Moreover, in some embodiments it is a task of the control system (C) to actively change a coupling stiffness and /or damping between the vessel (A1) and the pile (P).

Figure 5 indicates a sensor suite, comprising vessel absolute position sensor(s) (S1), Gripper relative position and force sensor(s) (S2), Monopile position and absolute inclination sensor(s) (S3), crane load sensor(s) (S4) and a monopile insertion depth measurement function (S5).

The sensor and measurement suite in a preferred embodiment of the invention comprises the following sensors and measurement functions:
- (S1) vessel absolute position sensors and associated measurement function. These sensors can comprise at least one inertial measurement unit (IMU), such as a unit integrating three accelerometers and three gyroscopes to measure its own motion in Earth reference frame, at least one GPS receiver for absolute pose estimation in Earth Coordinate system and can also comprise multiple IMU's and GPS, or GNSS systems and other external sensors, e.g. for GPS-based correction signals, that can be merged (fused) into a vessel absolute position measurement function. Preferably, the vessel absolute position sensor comprises two redundant inertial measuring units (IMUs) combined with a redundant differentially corrected GPS/GNSS system. However, the S1 sensors can comprise more, less and/or different sensors. The S1 sensors can be positioned on the vessel's deck and/or close to the position of the gripper and an additional input can be used with an GPS-correction signal to increase the accuracy. In any case, the sensor(s) S1 are configured to output an indication of an absolute position and/or orientation (pose) of the vessel.
- (S2) gripper relative position measurement sensors and gripper force sensors leading to a gripper relative position measurement or force measurement function. The position measurement of the gripper can e.g. be carried out by encoders or hall-sensors installed in the gripper actuators that actuate the gripper horizontal motion. The gripper force sensors can e.g. be force-sensing elements that are installed between the gripper actuator and the respective movable gripper structure responsible for the X-Y motion of the roller-box. Industry-standard load-cells can be used for this measurement, or alternatively also information that allows to infer the load from other measures such as for example the motor (armature) current in electric drives or pressure sensors in a hydraulically actuated machine. Preferably, the force-sensing is implemented at an output of at least part of at least one or on each individual drive-train that is responsible for actuating one of the 2 principal axes of horizontal movement of the gripper.
- (S3) monopile position and absolute inclination sensors and measurement function that derives the position and absolute monopile inclination in Earth Coordinate frame from either direct measurement or indirectly from a combination of measurements. The pile (P) absolute inclination can be received directly from IMU and/or GPS/GNSS data and/or from other sensors that can directly be applied to the pile (P), or to the Hammer (H) and/or it can be also obtained from a combination of measurements such as from a combination of range-data measurement with vessel absolute position. This can be obtained for example from laser range data, camera data and/or from other range measurements, such as e.g. LIDAR, e.g. LIDAR measured from the vessel towards the pile as shown in Figure 5, and/or combined with the sensor data from (S1) and/or alternatively with dedicated absolute location (position and rotation) measurement sensors for the pile inclination system (then, typically also GPS/GNSS and/or IMU based). This can also be obtained from sensors installed on the pile gripper itself.
- (S4) crane load sensor and measurement function, which measures the load of the monopile in the crane directly and/or indirectly with currently known methods such as a load-cell and/or via the motor-current in the crane hoist system. Preferably, the crane load measurement is obtained from a load-sensor directly mounted between the cable (hook) and monopile interface.
- The (S5) monopile insertion depth measurement function can be realized via multiple ways known in the industry. One simple way to measure the insertion depth is via the crane-system by monitoring the displacement of the hammer (H) during operational phase-III when the pile is driven into the seabed (S). But also other direct and/or indirect measurement methods are possible and can be conceived. Preferably, the insertion depth measurement comprises a combination of vessel-to-seabed ranging data (e.g. Sonar) with gripper data, such as encoder data obtained (possibly directly obtained) from the Z-rollers in a gripper roller-box, which is the interface between the gripper (G) and the pile (P).
- Any of the sensor and measurement functions above can be realized by a sensor directly or indirectly without losing applicability to the invention and preferably all sensors that are used or required to deliver the measurement data to carry out the measurement function will be fully hardware redundant and/or hot-swappable, for safety reasons.

Further measurement functions may be used as well, e.g. absolute position measurement (X,Y coordinate) of at least part of the pile (not shown).

Figure 2 indicates a control system. In this shown system, the controller (C1) uses the information of the vessel absolute position sensors (S1), positions and forces of the gripper (S2), the position and absolute inclination of the monopile (S3), the crane load sensors (S4), and the monopile depth (S5) to move the actuators (Y1) in a preferred way to stabilize the position of the monopile. Depending on the operational phase, any, some, or all of these sensors may be used by the controller. An optional human user interface (H1) allows the controller to change between different modes of operation (e.g., at transitions from one operational phase to another).

The shown sensor suite (S1-S5) hence finally processes and reads absolute position of the vessel (S1) and crane load (S4), the absolute inclination of the monopile (S3) the absolute insertion depth of the monopile (S5) and the relative positions and forces of several, preferably all movable axes of a mechanical gripper (S2). This information is passed to the controller (C1).

The controller acts on the position and force (Y1) of the mechanical gripper actuators.

A user interface (H1) allows changing the functionality of the control system.

During the monopile installation over all three phases, a preferred embodiment of the proposed control-system will fulfil a number of tasks related with the three main operational phases and will ensure a smooth transitioning between those phases, in particular, - during Phase-I the control system (C) ensures that energy in the pile is dissipated and that the pile can be safely inserted into the pile gripper (P),
- during the transition from Phase-I to Phase-II the control system (C) ensures that the ramping-up of the motion compensation control is synchronized with the lowering of the pile onto the seabed (S) and the off-loading of the hook,
- during Phase-II, to the control system ensures that the monopile stays and/or will stay vertical,
- during the transition of Phase-II to Phase-III the control system (C) keeps the monopile stable and
- in Phase-III to the control system ensures that the monopile is gradually de-coupled from the vessel and DP-system with progressing insertion into the seabed.

All control functions of an overall pile-gripper system that are not shown here, possibly normally to be considered relevant if not essential for an overall control system, can be considered "standard practice". Such functions and features include, but are not limited to, for instance, control system features to operate actuators, to prepare the gripper to receive data, to switch-on and switch-off the system, to log-data, etc.. and would include the 'standard' SCADA system, Human-Machine Interfaces, Graphical User Interfaces and all other standard systems as considered applicable by a person skilled in the art of industrial control systems. All such features not described here would be required to fully operate a pile gripper and perform and coordinate all standard tasks such as logging data, moving parts, opening doors, activating safety systems, activating thermal monitoring and controls, pre-heating, etc.. Those parts are not considered essential to this invention and take many various forms and are therefore not described in more detail in this disclosure.

Figure 7 indicates a preferred embodiment of the invention, the overall control system (C) depicted in a 'nested control-loop' manner showing 3 nested feedback loops with one parallel loop that may replace the outer two ones. The inset (in grey) shows a more detailed typical embodiment for the system indicated in grey, the "IMU, GPS and/or motor encoder measurements" block comprises multiple sub-systems as shown, i.e. at least 1 IMU, 1 GPS receiver, the option of an external correction signal, such as e.g. the MarineStar, PPP or RTKservice, fed into a sensor fusion algorithm and jointly with the feedback signals stemming from the gripper mechanics (encoders, etc..) forming the output of the measurement signal. However, in other embodiments more, less and/or other sub-systems may be used.

The preferred overall control system (C) (C1) subject to this invention is a system, which is responsible for the successful operation of the pile gripper and which is responsible for performing the active motion compensation and the positioning of the pile to reach the required installation performances. The preferred control system is arranged such as shown in Figure 7 and comprises the following key elements:
- A supervisory controller (SC), that supervises the coordination of the various control actions over the various phases of operations. The supervisory controller can be implemented in a fully automatic way, or can, alternatively, rely on human input provided by an operator through a human machine interface (H);
   Despite not being shown in Figure 7, the supervisory controller (SC) can be linked to any or all systems (mono- or bi-directionally) and possibly log any or all necessary data that could be of interest to the operation or later-on for postprocessing and/or analysis of the actual installation performances;
- Such data can comprise or be, for example, at least a selection of digital status data related to any or all sub-systems, end-switches, encoders, position sensors, etc.. analog data of any or all sub-systems, such as pressures, torques, currents, etc.. that can also be converted to digital data, any or all sensor data of the various sensors described below and any or all other data of interest to the control system, as required to perform a 'decision taking' or required for display and potential logging to human operators;
- A human machine interface (H) that provides information to one or multiple operators and that is configured to also receive human commands from one or multiple operators such as to influence the execution of tasks;
- A force-control sub-system (FC) which controls the forces, respective torque, of at least one or each of the drives involved in any or each movable part of the pile-gripper associated with its active motion compensation. One or more, preferably all gains and/or parameters of the FC can be adjusted by the supervisory controller, despite not being shown explicitly in the figure. However, in another preferred embodiment of the invention, the gains and parameters of this sub-system may remain constant.
- A position-control sub-system (PC) which controls the position of some or all of the pile-gripper movable parts (in particular the roller-box with the pile) with respect to the vessel and hence with respect to Earth Coordinate Frame. This position-control sub-system (PC) can act also as an Impedance Control sub-system (IMPC), by adjustable gains and parameters that ensure that the apparent stiffness and damping of one or more movable parts of the gripper can be influenced actively. Such parameter changes are performed by the supervisory control system and may be based on sensor feedback and/or human input.
- An inclination control sub-system (IC) which controls the inclination of the monopile and which is configured such that the inclination of the pile can be (preferably: always) kept within the required installation tolerances. The inclination control sub-system can be switched 'on' or 'off' and despite not being shown in the figure, also its gains and parameters can be adjusted by the supervisory controller on the fly.
- A fourth functional sub-system of the invention, which is optional and which in an aspect may be used in other control systems as well, is the Combined Vessel-to-Monopile controller (VMPC) which is arranged such that it can use the respective masses of the vessel and the monopile to stabilize the combined dynamic system. When operational, it may overrule the inclination control sub-system (IC) because it creates intentional offset in the pile inclination, in order to apply a force on the vessel that can quickly counteract any onsetting vessel drift-off, or to intentionally counteract a dynamic positioning system (DP-system) drift of the vessel.
- Some or all control sub-systems may be independently activated by the supervisory controller, based on sensor feedback and/or based on human choice through the human machine interface (H).
- The supervisory controller (SC) may make use of sensor inputs of the overall system to choose which control-system to activate when and with which parameter-set for its underlying controllers. In a preferred embodiment of the invention, the supervisory controller (SC) will receive at least real-time inputs from the crane-load measurement (S4) and measurements from the monopile insertion depth measurement (S5) which measurement may result at least in part from the crane-load measurement (S4).
- The control system may enable all sub-systems active or may only activate any one or a combination of sub-systems active at any time, then, with adjustable gains such as to ensure successful and safe installation over some or all operational phases;
- Some or all actual controllers in the various subsystems can be implemented by, for instance, standard proportional (P), Integral (I) and Derivative (D) action, in any combination and with as many stages as required by standard practice and also more advanced standard controllers may be employed.

Some or all control sub-systems can either receive independent inputs and provide independent outputs or can be cascaded, or grouped, or can be summarized into a single multiple-input multiple-output (MIMO) control system without the loss of generality, such as shown in Figure 8. Any combination of sub-system controllers can be grouped into a MIMO system and any of the sub-systems may or may not be included or remain outside such MIMO implementation without loss of applicability to this invention.

Figure 8 indicates a Control system, as an embodiment subject to this invention, shown in an alternative representation, replacing the nested individual sub-systems with a single MIMO controller being configured through the supervisory controller. The Monopile inclination measurement and associated PI controller are shown "outside" the MIMO only for reference and could also be included inside the MIMO structure, such as any other of the sub-systems described above. The force controller (FC) delivers its control output signal to the motors which can be electric, hydraulic or of hydro-motor type.

The primary sub-system, the force-control (FC) subsystem is arranged such that it receives a desired torque or force set-point as input and delivers a control signal as output to an actuator that is configured to process such output such as to create an equivalent torque or force mechanically to the gripper movable part.
- The mechanical output of an actuator may be either directly applied to a movable structure of the pile-gripper responsible for either X or Y motion (or both) or may be coupled to the output structure via a reducer. Actuators may be any actuators that are currently known in the art, such as electric motors of all variations (synchronous, asynchronous, stepper, etc.), hydraulic motors (hydro-motors) of all variations (e.g. primary control or secondary control-type), hydraulic cylinders of all variations as currently known in the field or any other actuator deemed suitable for the application. The preferred embodiment of the invention is a force control sub-system configured to measure the actual torque from an electric actuator with a reducer with a small reduction ratio (e.g. a reduction ratio of between 10:1 up to 100:1) and to measure the output torque of this reducer directly by a sensor and feed-back this torque to the force control sub-system (FC).
- Force and/or torque sensors for the torque control sub-system may be realized via a standard industrial components (load-cell), e.g. based on strain-gauge measurements, or, alternatively may be measured by any other measurement principle that is suitable to measure the torque at the output of an individual drive-train;
- Alternatively, an indirect method may also be used to estimate the output torque of a given actuator based on its input. Such indirect methods are known in the field and can be, e.g. based on measurement of the (armature) current flowing through a direct-current electrical motor. Various solutions may be implemented.
- In addition to measurement of the output force and/or torque, preferably directly at the mechanical output of the mechanical actuator that applies the motion to the gripper, also the position-changes of the actuator may be measured and fedback to the force-control system and/or to the supervisory controller and/or to the other involved control sub-systems. In a preferred embodiment of the invention, the encoder feedback signals of an electrical drive will be fed to the position-control sub-system (PC);
- In a preferred embodiment of the invention, the force-control subsystem is realized as a sequence of PI or PID controllers, one for each actuator drive-train;
- One actuator drive-train, for instance for an X-displacement of the gripper, may comprise multiple actuators, such as of multiple electrical motors in a rack-and-pinion configuration or such as of multiple hydraulic actuators connected in series or in parallel or in any series- and parallel configuration. Also or alternatively, actuator drivetrains may also be coupled with the displacement directions, such as having a set of actuators controlling a (sub)-set of both horizontal directions of the gripper;

In a preferred embodiment of the invention, a gripper position-control (PC) sub-system is nested around the force control sub-system that is arranged such as to follow a given reference position input and to generate an output towards the force-control sub-system. In particular:
- The position-control sub-system receives information from a sensor and measurement function (S2) that delivers positional information on the positioning of the gripper movable part(s) with respect to the static part(s) fixed on the vessel. For example, via a motor absolute rotary encoder mounted on one of the actuators tasked to position the gripper, the position of an output shaft (pinion-gear) can be measured along a rack and thereby, the control system can infer the pinion-gear relative or absolute positioning from the rack and from its reference position. Also or alternatively a direct linear measurement of motor displacement along a rack may be measured. Also or alternatively to providing position feedback from the actuators, equivalently or additionally also velocity information may be provided of the various elements of the system.
- In order to interpret measured position information in the correct and required coordinate systems, such as required throughout the various phases of the operation, any position, velocity or acceleration information measured by the system may be re-computed to an equivalent position, velocity or acceleration in a different reference system. Such re-mapping can be performed with the aid of a number of other sensors, such as inertial measurement units (IMU's) or GPS-/GNSS data that is acquired. The invention may make use of any one of such sensors or of multiple such sensors, such as shown, for example, in the grey insert in Figure 7, which details the "IMU, GPS and/or motor encoder measurements" block of the control system. Various currently known methods for sensor-fusion can be used (such as e.g. Kalman Filters, Observers, etc.) to obtain more robust estimates of some or all related input variables that are needed by the controller;

In a preferred embodiment of the invention, the Monopile position controller (PC) will receive as input, the instantaneous absolute position and/or velocity and/or acceleration of the vessel, the instantaneous position and/or velocity and/or acceleration of some or all actuators and the activation signals and gain- and other variable sets via the supervisory control system;
- The position-controller is arranged such that by adjusting its proportional, integral and/or derivative gains, the 'stiffness' and 'damping' of the position control part can be adjusted at run-time through the supervisory control function. This is why, the position control sub-system (PC) may also be called an Impedance Control Sub-system or may also be interpreted as an Admittance control sub-system, depending on the actual sensor choice;
- The position-control sub-system may ensure that the pile-grippers position is controlled such that it locates the center-point of the pile on the desired absolute location in Earth coordinates.

In a preferred embodiment of the invention, the position-control sub-system is fed from the output of the inclination-control subsystem (IC), which can also be considered optional, but greatly improves the performance of the overall system.
- The inclination control sub-system may receive a measurement of the pile inclination in absolute Earth coordinate frame. If not provided in absolute earth coordinates, then, the input measurement may be re-computed inside the inclination controller to map it into a corresponding measurement signal. Whereas Figure 7 shows a single block with a single input for the monopile inclination measurement, in practice, multiple inputs may be used from multiple sensors that are computed such as to achieve a robust estimation or measurement of the actual pile inclination.
- For example, the pile inclination may be measured by a LIDAR system from the vessel and then be re-computed jointly with the vessel INS (inertial navigation system), IMU or GPS/GNSS information into a pile inclination measurement in absolute Earth coordinates. Also or alternatively, the pile inclination may also be obtained directly, e.g. from a tiltsensor that is directly installed on the pile, or may be obtained from any other inclination measurement method that is currently standard of practice in the field.
- The pile inclination control sub-system may receive its gain-parameters as well as an "on/off" signal from the supervisory control system and receives as input the desired inclination set-point for the monopile, which is, in a preferred embodiment of the invention, a zero set-point.
- The pile inclination control sub-system actual controllers can be realized with any currently known standard control structure. In a preferred embodiment it is realized with a PID controller with variable parameters.

In a preferred embodiment of the invention, moreover, a dedicated Combined Vessel-to-Monopile controller (VMPC) is implemented in parallel to the monopile position control and inclination control subsystems. This controller is arranged such as to cause gripper motions that stabilize the combined grippervessel system if needed. If the supervisory controller detects, for example, either a large deviation in pile-inclination, or for example a drift-off of the vessel via its INS-system, or for example a constant propagation of the gripper through its workspace and risking to reach the work-space end limits, or for example detects another anomaly in the system indicating a possible pile-fall, or a combination thereof, then this system can be activated to stabilize the vessel position by shifting the pile mass in such a way as to relocate the vessel with the pile mass. For this purpose, the controller can make use of measurement data of the system that is not shown in the figures above (e.g. end-switches, etc.) and can make use of any of the sensor inputs (S1 - S5) or any processed result from such inputs. The combined vessel-to-monopile controller is preferably arranged to one or more of:
- Balance the pile under failure of the DP-system;
- Influence the vessel position in absolute Earth coordinates at the expense of applying monopile inclinations;
- Move the pile inclination to a safe-eject pose in a scenario where an installation abort may be unavoidable;

In a preferred embodiment of the invention, the activation of the combined vessel-to-monopile controller (VMPC) by the supervisory controller will be associated with or cause a de-activation of the position- and inclination control subsystems;

Alternatively to, or in addition to, activating the VMPC, the supervisory controller may also then cause a correction signal to be sent to the vessel DP-system, such as to cause a gradual improvement of the given situation that causes the vessel drift to stop or to again move the gripper end-point in its center workspace by a support of the DP-system itself.

The control-system may change the activation and configuration of any of its sub-systems depending on the operational phase in which the installation is performed.

In the following, the preferred control system configuration will be shown for all of the three major phases which a monopile installation will undergo.

During operational Phase-I (Figure 2), a preferred embodiment of the invention will be configured as shown in Figure 9.
- The control system tracks and grasps the monopile with the gripper. Excessive movement of the pile is damped by the control-system. The Monopile position controller acts as an Impedance controller and the stiffness and damping changes as a function of the crane-load.
- During Phase-I the control system uses the vessel absolute position sensors (S1), gripper sensors (S2) and the monopile sensors (S3) to track movement of the monopile and grasp it with the gripper. The monopile is still lifted by the crane;
- The pile (P) is positioned at the desired seabed absolute location by combining movement of the vessel and the gripper (and crane). For this purpose, a dedicated control link from the control system (C) to the crane may be implemented;
- Excessive swing movement of the monopile is damped by the control system by measuring one or more of the velocity, position and forces of the monopile relative to the vessel and by adjusting the position-control loop stiffness and/or damping;
- Once the monopile touches the seabed, the control system gradually transitions from crane stabilized monopile to gripper stabilized monopile, which allows to set-on the marine motion compensation (compensating wave-induced motions on vessel, pile as well as wind-induced motions) such as to not create a conflict with the crane. In addition to the inputs shown in Figure 9, the position-controller part may receive also another dedicated second input signal as a set-point;
- Preferably, the interface stiffness of the gripper is commanded to change from "soft" to "stiff" as a function of the crane load (measured by S4) by the supervisory controller, to gradually transition from force mitigation to motion compensation control. This avoids damaging the crane with side loads.
- At the end of Phase-I the pile is fully supported on the seabed. It has sunken to self-weight penetration depth (SWP) and the motion compensation system of the gripper is ready to execute its commands to perform a good pile position stabilization. The hook of the crane can be removed.

Thus, Figure 9 indicates a configuration of the control-system during operational phase-I. The control system tracks and grasps the monopile with the gripper. Excessive movement of the pile is damped by the control-system. The Monopile position controller acts as an Impedance controller and the stiffness and damping changes as a function of the crane-load, ramping up in stiffness with lowering the crane-load.

As said, Figure 10 indicates a configuration of a preferred embodiment of the control-system during operational Phase-II in baseline configuration (A) and shown as an alternative configuration (B). The control system uprights the monopile with a stiff position control setting and with the inclination controller if the vessel is in a safe operation position. If the vessel is not within its safe operational position (e.g. reaching workspace limit or excessive DP-drift), then the controller stabilizes the vessel and monopile with the combined vessel-monopile controller (VMPC).

During operational Phase-II (Figure 3), the preferred embodiment of the invention may be configured as shown in figure A, "Baseline" configuration.
- During Phase-II the monopile is supported by the seabed and the crane has been released.
- The control system uprights the monopile with a stiff position control setting and with the inclination controller if the vessel is in a safe operation position. If the vessel is not within its safe operational position (e.g. reaching workspace limit or excessive DP-drift), then the controller stabilizes the vessel and monopile with the combined vessel-monopile controller (VMPC) ;
- The control system uses the sensors S1, S2 and S3 to stabilize the monopile up-right;
- Sensor measurements from the S1 system provide the absolute vessel position in earth coordinates, from S2 positional and velocity information from the gripper actuator system, which is re-computed in the necessary coordinates if needed, and from S3 absolute monopile inclination as described earlier.
- The combined vessel-monopile controller is triggered whenever either one or more of the following situations are detected by the supervisory controller:
   -- Vessel drift-off;
   -- Reaching the workspace limit on any one of the combination of gripper axes;
   -- Failure of the DP-system;
   -- Excessive DP-system drift-off;
   -- Excessive monopile inclination that cannot be counter-acted by the other control systems;
- If the vessel position is within a safe area and within nominal operational conditions, the control system uprights the monopile continuously using at least some of the absolute monopile position and inclination measurements and the other measurement data as described earlier.
- If the vessel position is not within a safe area and operational conditions, the control system stabilizes both the monopile and the vessel using the vessel measurement sensors and monopile measurements (any combination of sensors S1 to S4, and/or even S5). The mass of the monopile is then used to move the vessel indirectly. Once the vessel is back on the safe area and within nominal operational conditions, the control system up-rights the monopile and continues in pile motion compensation mode.
- For the switch between these configurations, the switch (SW1) indicated in Figure 10 will be activated. For the avoidance of doubt, the switch may be either a simple "on/off" functionality or be more complex, such as to gradually transfer authority between the two parallel control systems. The switch (SW1) may be operated by the control system and/or by a human, e.g. via human machine interface H1 (not indicated).

An alternative control system configuration is shown in Figure 10 (B), which also denotes a possible configuration of the invention in this phase:
- In addition to, or alternatively to, activation of the combined vessel-monopile controller, the control system (C) may also transmit a correction signal to the vessel DP-system which may cause the vessel DP-system to respond to the operational status either by interpreting this correction signal as a force-signal or by a position-signal (or by interpreting this correction signal as a position-signal) or by a velocityor acceleration signal (or by interpreting this correction signal as a velocity- or acceleration signal), or any combination thereof, and activating its thrusters in a way such as to help the situation;
- It is considered, however, that often a corresponding DP-system may be too slow to react sufficiently quick such as to recover from such non-nominal situations. This is why, in one embodiment of the invention, the combination of signaling to the DP-system and, in parallel, activating the VMPC controller may be used;
- The information transmitted to the DP-system may also be used by the supervisory controller to adjust the gains and activation patterns of the VMPC, force-, position- and/or inclination- controllers.
- Additionally, to transmitting information to the DP-system, also, additional information from the DP-system may be used by the supervisory controller to influence any of its subsystems, such as to change their activation, states and/or parameters to remedy the situation.

Figure 11 indicates a configuration of the control system during Phase-III. During pile-driving, the control system keeps the monopile up-right and in addition reduces the stiffness and/or damping of the monopile position controller as a function of the monopile penetration depth in the seabed.

During operational Phase-III (Figure 4), a preferred embodiment of the invention will be configured as shown in Figure 11.
- During Phase-III the monopile is driven into the seabed (piling), e.g. by activation of a pile-driver or hammer (H) then installed on top of the pile;
- While being piled into the seabed (S), the control system keeps the monopile up-right by activating its force-control function, its position control-function and preferably also its inclination control function;
- The supervisory controller (SC) receives a measurement input related with the insertion depth of the monopile into the seabed (Monopile Insertion Depth Measurement).
   -- For the avoidance of doubt, this measurement input can either be directly measured, e.g. by a sensor located in the pile or pile-driver, and/or by a sensor installed on the gripper that encloses the pile, or it can also be obtained more indirectly, by combining a number of measurements, such as e.g. the depth measurement under the vessel, the encoder signals of roller-joints that roll along the z-axis of the pile, or any other combination of signals that can reasonably be used by a skilled person in the art;
- During pile driving, the pile will gradually transition from gripper up-right stabilized to being upright stabilized by the seabed itself, since the seabed will develop a stiffer interface with the pile the deeper the pile is inserted;
- In order to avoid the onset of instability of the DP-system, which is likely to be configured for maximum precision (and hence will receive an external constraint from the stiff monopile as a disturbance), the interface stiffness between the monopile and the gripper and/or vessel is gradually reduced by the supervisory control-system by adjusting the control-gains in the position-control loop that now acts like an impedance controller for the gripper.
   -- For the avoidance of doubt, instead of reducing the stiffness and/or damping in the gripper position control system actively by gain adjustments, alternatively, the stiffness and/or damping at the interface that holds the pile may be reduced either actively or passively. It is considered, however, that the interface should have sufficient workspace to tolerate operation within the desired operational limits. Moreover, the stiffness may also be changed passively, if e.g. hydraulic cylinders are used in the drive-train. In such a case, stiffness reduction can be obtained by coupling additional hydraulic reservoirs (e.g. gas-filled springs) in series that can be added to the drive-train in a step-wise fashion. Such stiffness changes will be less gradual, however, and may be considered a less-preferred or non-preferrable embodiment of this invention.
- During part of or, preferably, the entire pile driving sequence, the gripper controller compensates motions induced by vessel and/or pile due to waves and wind;
- Towards the end of the pile driving, when the pile is firmly inserted into the seabed at or near target insertion depth, the impedance between pile and gripper and/or vessel may be set to sufficiently low that no significant dynamic interaction can cause DP-system instability and such as to isolate the pile sufficiently from the vessel/gripper and its control systems (DP).

For the avoidance of doubt, a monopile installation sequence will have more than just these three critical phases, however, the principles of operation of the controller during other involved operational sequences are similar to those principles described above, albeit with changes in parameters and relationships.

When retracting the vessel from the finally installed monopile, the gripper is opened, retracted and the vessel is free to clear from the site. Various stiffness and/or damping parameter and gain parameter changes may be performed by the supervisory controller, with or without human input, also during this step without changing the concept of the proposed invention.

It is understood that while a control system has been described above, any statements made throughout this disclosure with respect to the control system likewise apply to a corresponding control method (and vice versa).

Further, the disclosure is not restricted to the above described embodiments which can be varied in a number of ways within the scope of the claims.

Various embodiments may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

Elements and aspects discussed for or in relation with a particular embodiment may be suitably combined with elements and aspects of other embodiments, unless explicitly stated otherwise.

## Claims

1. A method of controlling at least one of a position and an orientation of an elongated structure to be placed into a water bottom formation, connected via a gripper (G) to a vessel (A1), the method comprising:
receiving force data indicative of an interaction force between the structure and the gripper (G); and
controlling a position and/or an orientation of the structure and/or the vessel (A1), in particular controlling a position and/or orientation of the structure and the vessel (A1) with respect to each other,
wherein controlling the position and/or the orientation of the structure and/or the vessel (A1) comprises controlling the position and/or the orientation of the structure and/or the vessel (A1) on the basis of the force data; and
wherein the method further comprises:
determining at least one of a stiffness and a damping of a coupling between the vessel (A1) and the structure when connected via the gripper (G); and
dynamically adjusting the at least one of the stiffness and the damping of the coupling, based on the force data.

2. The method according to claim 1,
wherein controlling the position and/or the orientation of the structure and/or the vessel (A1) involves control by at least two nested feedback loops, wherein the at least two nested feedback loops include an inner feedback loop as a first feedback loop for dynamically adjusting the at least one of the stiffness and the damping of the coupling based on the force data, and an outer feedback loop as a second feedback loop for motion compensation, wherein the second feedback loop is configured to determine a required stiffness and/or damping of the coupling and provide set points to the first feedback loop based on the required stiffness and/or damping of the coupling, and
wherein, optionally, the at least two nested feedback loops further include a third feedback loop for inclination control of the structure, wherein the third feedback loop encloses the first and second feedback loops.

3. The method according to claim 1,
wherein controlling the position and/or the orientation of the structure and the vessel (A1) comprises controlling an actuator between the vessel (A1) and the gripper (G) based on the force data, in particular controlling the actuator to control the position and/or the orientation of the structure and the vessel (A1), and
wherein, optionally, controlling the actuator comprises controlling a force and/or a torque of a drive of the actuator and/or controlling a relative position and/or movement of movable parts of the actuator.

4. The method according to any one of claims 1 to 3, further comprising:
receiving structure data indicative of at least one of a position, an orientation and a movement of the structure,
wherein controlling the position and/or the orientation of the structure and/or the vessel (A1) also comprises controlling the position and/or the orientation of the structure and/or the vessel (A1) based on the structure data,
and/or
wherein the method further comprises:
receiving vessel data indicative of at least one of a position, an orientation and a movement of the vessel (A1),
wherein controlling the position and/or the orientation of the structure and/or the vessel (A1) also comprises controlling the position and/or the orientation of the structure and/or the vessel (A1) based on the vessel data,
and/or
wherein the method further comprises:
receiving structure data indicative of at least one of a position, an orientation and a movement of the structure in Earth Coordinates and/or relative to the water bottom formation wherein the structure is to be placed, and/or
receiving vessel data indicative of a position and/or a movement of the vessel (A1), in particular a position and/or a movement of the vessel (A1) in Earth Coordinates and/or relative to the water bottom formation wherein the structure is to be placed,
wherein controlling a position and/or an orientation of the structure and/or the vessel (A1) also comprises controlling the position and/or the orientation of the structure and/or the vessel with respect to Earth Coordinates and/or with respect to the water bottom formation.

5. The method according to any one of claims 1 to 4,
further comprising receiving load data, from a load sensor configured to detect a load on a hoisting system supporting the structure,
wherein controlling the position and/or the orientation of the structure and/or the vessel also comprises controlling the position and/or the orientation of the structure and/or the vessel based on the load data.

6. The method according to any one of claims 1 to 5, further comprising:
receiving configuration data indicative of a relative position and/or movement of one or more movable parts of the actuator, and/or
receiving vessel data indicative of a position and/or a movement of the vessel, in particular a position and/or a movement of the vessel relative to the water bottom formation wherein the structure is to be placed,
wherein controlling the position and/or the orientation of the structure and/or the vessel also comprises controlling the position and/or the orientation of the structure and/or the vessel based on the configuration data and/or the vessel data,
in particular in case the configuration data are indicative of the relative position and/or movement of movable parts of the actuator being outside of a predetermined space and/or velocity range, and/or
in case the vessel data are indicative of the vessel being positioned and/or moving outside of a predetermined space and/or velocity range.

7. The method according to any one of claims 1 to 6, further comprising:
determining a position on or in the water bottom formation wherein the structure is to be placed, and controlling the position and/or the orientation of the structure and the vessel symmetrically about the position; and/or
determining a center of mass and/or a center or inertia of an assembly comprising the structure and the vessel connected via the gripper, and controlling the position and/or the orientation of the structure and the vessel symmetrically about the center of mass and/or the center or inertia.

8. The method according to claim 1, comprising:
adjusting the stiffness of the coupling from a first stiffness setting to a second, different, stiffness setting, or from the second to the first stiffness setting, and/or
adjusting the damping from a first damping setting to a second, different damping setting, or from the second to the first damping setting, and
wherein, optionally, the method further comprises:
adjusting the stiffness of the coupling to one or more stiffness settings in between the first and second stiffness settings; and/or
adjusting the damping of the coupling to one or more damping settings in between the first and second damping settings.

9. The method according to any one of claims 1 to 8, comprising adjusting the at least one of the stiffness and the damping of the coupling on the basis of the force data, and/or, when received, one or more of structure data, vessel data, load data, configuration data, and insertion data.

10. The method according to any one of claims 1 to 9, further comprising:
receiving at least one of
load data indicative of a load on a hoisting system supporting the structure, and
insertion data indicative of an insertion depth of the structure into a water bottom formation and/or indicative of a length of the structure protruding from the water bottom formation, and
adjusting the stiffness of the coupling and/or adjusting the damping of the coupling on the basis of at least one of the load data and the insertion data.

11. The method according to any one of the preceding claims, comprising:
arranging the vessel in a body of water,
supporting the structure from a hoisting system of the vessel,
connecting the structure via the gripper to the vessel,
placing the structure onto and/or or into the water bottom formation of the body of water,
driving the structure into the water bottom formation, and
disconnecting the structure from the gripper and/or from the vessel.

12. A system for controlling at least one of a position and an orientation of an elongated structure, the system comprising:
a gripper mountable or mounted to a vessel for connecting with the vessel via the gripper an elongated structure, such as a pile, in particular a pile to be placed into a water bottom formation while gripped by the gripper;
a computer comprising a computer readable storage medium having computer readable program code embodied therewith, and a processor, preferably a microprocessor, coupled to the computer readable storage medium, wherein responsive to executing the computer readable program code, the processor is configured to perform executable operations comprising:
receiving force data from a force sensor configured to detect an interaction force between the structure and the gripper;
controlling based on the force data, a control system (C) of the vessel and/or an actuator between the vessel and the gripper to control the position and/or the orientation of the structure and/or the vessel in particular controlling the position and/or the orientation of the structure and the vessel with respect to each other;
determining at least one of a stiffness and a damping of a coupling between the vessel and the structure, when the gripper is mounted to the vessel and connects the elongated structure to the vessel; and
dynamically adjusting the at least one of the stiffness and the damping of the coupling, based on the force data.

13. A vessel comprising the system according to claim 12.

14. A computer program product comprising instructions to cause the system of any one of the claims 12 to 13 to execute the method steps according to any one of claims 1 to 11.

15. A computer-readable medium having stored thereon the computer program product according to claim 14.

## Patentansprüche

1. Verfahren zum Steuern mindestens einer von einer Position und einer Ausrichtung einer länglichen Struktur, die in eine Wasserbodenformation zu platzieren ist, die über einen Greifer (G) mit einem Wasserfahrzeug (A1) verbunden ist, wobei das Verfahren Folgendes aufweist:
Empfangen von Kraftdaten, die eine Interaktionskraft zwischen der Struktur und dem Greifer (G) angeben; und
Steuern einer Position und/oder einer Ausrichtung der Struktur und/oder des Wasserfahrzeugs (A1), insbesondere Steuern einer Position und/oder einer Ausrichtung der Struktur und des Wasserfahrzeugs (A1) in Bezug zueinander,
wobei das Steuern der Position und/oder der Ausrichtung der Struktur und/oder des Wasserfahrzeugs (A1) ein Steuern der Position und/oder der Ausrichtung der Struktur und/oder des Wasserfahrzeugs (A1) auf der Grundlage von den Kraftdaten aufweist; und
wobei das Verfahren ferner Folgendes aufweist:
Bestimmen von mindestens einem von einer Steifigkeit und einer Dämpfung einer Kopplung zwischen dem Wasserfahrzeug (A1) und der Struktur, wenn sie über den Greifer (G) verbunden ist; und
dynamisches Anpassen des mindestens einen von der Steifigkeit und der Dämpfung der Kopplung auf der Grundlage von den Kraftdaten.

2. Verfahren nach Anspruch 1,
wobei das Steuern der Position und/oder der Ausrichtung der Struktur und/oder des Wasserfahrzeugs (A1) eine Steuerung durch mindestens zwei verschachtelte Rückkopplungsschleifen involviert, wobei die mindestens zwei verschachtelten Rückkopplungsschleifen eine innere Rückkopplungsschleife als eine erste Rückkopplungsschleife zum dynamischen Anpassen des mindestens einen von der Steifigkeit und der Dämpfung der Kopplung auf der Grundlage von den Kraftdaten und eine äußere Rückkopplungsschleife als eine zweite Rückkopplungsschleife zur Bewegungskompensation enthalten, wobei die zweite Rückkopplungsschleife dazu konfiguriert ist, eine erforderliche Steifigkeit und/oder Dämpfung der Kopplung zu bestimmen und Sollwerte für die erste Rückkopplungsschleife auf der Grundlage von der erforderlichen Steifigkeit und/oder Dämpfung der Kopplung bereitzustellen, und
wobei optional die mindestens zwei verschachtelten Rückkopplungsschleifen ferner eine dritte Rückkopplungsschleife zur Neigungssteuerung der Struktur enthalten, wobei die dritte Rückkopplungsschleife die erste und die zweite Rückkopplungsschleife umschließt.

3. Verfahren nach Anspruch 1,
wobei das Steuern der Position und/oder der Ausrichtung der Struktur und des Wasserfahrzeugs (A1) ein Steuern eines Aktuators zwischen dem Wasserfahrzeug (A1) und dem Greifer (G) auf der Grundlage von den Kraftdaten aufweist, insbesondere ein Steuern des Aktuators, um die Position und/oder die Ausrichtung der Struktur und des Wasserfahrzeugs (A1) zu steuern, und
wobei optional das Steuern des Aktuators ein Steuern einer Kraft und/oder eines Drehmoments eines Antriebs des Aktuators und/oder ein Steuern einer relativen Position und/oder Bewegung von beweglichen Teilen des Aktuators aufweist.

4. Verfahren nach einem der Ansprüche 1 bis 3, das ferner Folgendes aufweist:
Empfangen von Strukturdaten, die mindestens eins von einer Position, einer Ausrichtung und einer Bewegung der Struktur angeben,
wobei das Steuern der Position und/oder der Ausrichtung der Struktur und/oder des Wasserfahrzeugs (A1) auch ein Steuern der Position und/oder der Ausrichtung der Struktur und/oder des Wasserfahrzeugs (A1) auf der Grundlage von den Strukturdaten aufweist,
und/oder
wobei das Verfahren ferner Folgendes aufweist:
Empfangen von Wasserfahrzeugdaten, die mindestens eins von einer Position, einer Ausrichtung und einer Bewegung des Wasserfahrzeugs (A1) angeben,
wobei das Steuern der Position und/oder der Ausrichtung der Struktur und/oder des Wasserfahrzeugs (A1) auch ein Steuern der Position und/oder der Ausrichtung der Struktur und/oder des Wasserfahrzeugs (A1) auf der Grundlage von den Wasserfahrzeugdaten aufweist,
und/oder
wobei das Verfahren ferner Folgendes aufweist:
Empfangen von Strukturdaten, die mindestens eins von einer Position, einer Ausrichtung und einer Bewegung der Struktur in Erdkoordinaten und/oder relativ zu der Wasserbodenformation angeben, in der die Struktur zu platzieren ist, und/oder
Empfangen von Wasserfahrzeugdaten, die eine Position und/oder eine Bewegung des Wasserfahrzeugs (A1) angeben, insbesondere eine Position und/oder eine Bewegung des Wasserfahrzeugs (A1) in Erdkoordinaten und/oder relativ zu der Wasserbodenformation, in der die Struktur zu platzieren ist,
wobei das Steuern einer Position und/oder einer Ausrichtung der Struktur und/oder des Wasserfahrzeugs (A1) auch ein Steuern der Position und/oder der Ausrichtung der Struktur und/oder des Wasserfahrzeugs in Bezug auf Erdkoordinaten und/oder in Bezug auf die Wasserbodenformation aufweist.

5. Verfahren nach einem der Ansprüche 1 bis 4,
ferner mit einem Empfangen von Lastdaten von einem Lastsensor, der dazu konfiguriert ist, eine Last auf einem Hebesystem zu erfassen, das die Struktur unterstützt,
wobei das Steuern der Position und/oder der Ausrichtung der Struktur und/oder des Wasserfahrzeugs auch ein Steuern der Position und/oder der Ausrichtung der Struktur und/oder des Wasserfahrzeugs auf der Grundlage von den Lastdaten aufweist.

6. Verfahren nach einem der Ansprüche 1 bis 5, das ferner Folgendes aufweist:
Empfangen von Konfigurationsdaten, die eine relative Position und/oder Bewegung von einem oder mehreren beweglichen Teilen des Aktuators angeben, und/oder
Empfangen von Wasserfahrzeugdaten, die eine Position und/oder eine Bewegung des Wasserfahrzeugs angeben, insbesondere eine Position und/oder eine Bewegung des Wasserfahrzeugs relativ zu der Wasserbodenformation, in der die Struktur zu platzieren ist,
wobei das Steuern der Position und/oder der Ausrichtung der Struktur und/oder des Wasserfahrzeugs auch ein Steuern der Position und/oder der Ausrichtung der Struktur und/oder des Wasserfahrzeugs auf der Grundlage von den Konfigurationsdaten und/oder den Wasserfahrzeugdaten aufweist,
insbesondere in dem Fall, dass die Konfigurationsdaten angeben, dass die relative Position und/oder Bewegung von beweglichen Teilen des Aktuators außerhalb eines vorbestimmten Raums und/oder Geschwindigkeitsbereichs liegt, und/oder
in dem Fall, dass die Wasserfahrzeugdaten angeben, dass das Wasserfahrzeug außerhalb eines vorbestimmten Raums und/oder Geschwindigkeitsbereichs positioniert ist und/oder sich bewegt.

7. Verfahren nach einem der Ansprüche 1 bis 6, das ferner Folgendes aufweist:
Bestimmen einer Position auf oder in der Wasserbodenformation, in der die Struktur zu platzieren ist, und Steuern der Position und/oder der Ausrichtung der Struktur und des Wasserfahrzeugs symmetrisch um die Position; und/oder
Bestimmen eines Massenschwerpunkts und/oder einer Mitte oder einer Trägheit einer Zusammensetzung, welche die Struktur und das Wasserfahrzeug aufweist, die über den Greifer verbunden sind, und Steuern der Position und/oder der Ausrichtung der Struktur und des Wasserfahrzeugs symmetrisch um den Massenschwerpunkt und/oder die Mitte oder die Trägheit.

8. Verfahren nach Anspruch 1, das Folgendes aufweist:
Anpassen der Steifigkeit der Kopplung von einer ersten Steifigkeitseinstellung auf eine zweite, andere Steifigkeitseinstellung oder von der zweiten auf die erste Steifigkeitseinstellung, und/oder
Anpassen der Dämpfung von einer ersten Dämpfungseinstellung auf eine zweite, andere Dämpfungseinstellung oder von der zweiten auf die erste Dämpfungseinstellung, und
wobei optional das Verfahren ferner Folgendes aufweist:
Anpassen der Steifigkeit der Kopplung auf eine oder mehrere Steifigkeitseinstellungen zwischen der ersten und der zweiten Steifigkeitseinstellung; und/oder
Anpassen der Dämpfung der Kopplung auf eine oder mehrere Dämpfungseinstellungen zwischen der ersten und der zweiten Dämpfungseinstellung.

9. Verfahren nach einem der Ansprüche 1 bis 8, das ein Anpassen des mindestens einen von der Steifigkeit und der Dämpfung der Kopplung auf der Grundlage von den Kraftdaten und/oder, wenn sie empfangen sind, einem oder mehreren von Strukturdaten, Wasserfahrzeugdaten, Lastdaten, Konfigurationsdaten und Einführungsdaten aufweist.

10. Verfahren nach einem der Ansprüche 1 bis 9, das ferner Folgendes aufweist:
Empfangen von mindestens einem von
Lastdaten, die eine Last auf einem Hebesystem angeben, das die Struktur unterstützt, und
Einführungsdaten, die eine Einführungstiefe der Struktur in eine Wasserbodenformation angeben und/oder eine Länge der Struktur angeben, die von der Wasserbodenformation vorsteht, und
Anpassen der Steifigkeit der Kopplung und/oder Anpassen der Dämpfung der Kopplung auf der Grundlage von mindestens einem von den Lastdaten und den Einführungsdaten.

11. Verfahren nach einem der vorhergehenden Ansprüche, das Folgendes aufweist:
Anordnen des Wasserfahrzeugs in einem Gewässer,
Unterstützen der Struktur von einem Hebesystem des Wasserfahrzeugs,
Verbinden der Struktur über den Greifer mit dem Wasserfahrzeug,
Platzieren der Struktur auf und/oder in die Wasserbodenformation des Gewässers,
Treiben der Struktur in die Wasserbodenformation, und
Trennen der Struktur von dem Greifer und/oder von dem Wasserfahrzeug.

12. System zum Steuern mindestens einer von einer Position und einer Ausrichtung einer länglichen Struktur, wobei das System Folgendes aufweist:
einen Greifer, der an einem Wasserfahrzeug montierbar oder montiert ist, zum Verbinden einer länglichen Struktur, wie etwa eines Pfahls, insbesondere eines Pfahls, der in eine Wasserbodenformation zu platzieren ist, mit dem Wasserfahrzeug über den Greifer, während er von dem Greifer gegriffen wird;
einen Computer, der ein von dem Computer lesbares Speichermedium mit einem darin enthaltenen, von dem Computer lesbaren Programmcode und einen Prozessor, vorzugsweise einen Mikroprozessor, aufweist, der mit dem von dem Computer lesbaren Speichermedium gekoppelt ist, wobei der Prozessor als Reaktion auf das Ausführen des von dem Computer lesbaren Programmcodes dazu konfiguriert ist, ausführbare Operationen durchzuführen, die Folgendes aufweisen:
Empfangen von Kraftdaten von einem Kraftsensor, der dazu konfiguriert ist, eine Interaktionskraft zwischen der Struktur und dem Greifer zu erfassen;
Steuern eines Steuersystems (C) des Wasserfahrzeugs und/oder eines Aktuators zwischen dem Wasserfahrzeug und dem Greifer auf der Grundlage von den Kraftdaten, um die Position und/oder die Ausrichtung der Struktur und/oder des Wasserfahrzeugs zu steuern, insbesondere die Position und/oder die Ausrichtung der Struktur und des Wasserfahrzeugs in Bezug zueinander zu steuern;
Bestimmen von mindestens einem von einer Steifigkeit und einer Dämpfung einer Kopplung zwischen dem Wasserfahrzeug und der Struktur, wenn der Greifer an dem Wasserfahrzeug montiert ist und die längliche Struktur mit dem Wasserfahrzeug verbindet; und
dynamisches Anpassen des mindestens einen von der Steifigkeit und der Dämpfung der Kopplung auf der Grundlage von den Kraftdaten.

13. Wasserfahrzeug, welches das System nach Anspruch 12 aufweist.

14. Computerprogrammprodukt, das Anweisungen dazu aufweist, zu veranlassen, dass das System nach einem der Ansprüche 12 bis 13 die Verfahrensschritte nach einem der Ansprüche 1 bis 11 auszuführt.

15. Von einem Computer lesbares Medium, auf dem das Computerprogrammprodukt nach Anspruch 14 gespeichert ist.

## Revendications

1. Procédé de commande d'au moins l'une d'une position et d'une orientation d'une structure allongée à placer dans une formation de fond d'eau, reliée par l'intermédiaire d'un préhenseur (G) à un navire (A1), le procédé comprenant :
la réception de données de force indicatives d'une force d'interaction entre la structure et le préhenseur (G) ; et
la commande d'une position et/ou d'une orientation de la structure et/ou du navire (A1), en particulier la commande d'une position et/ou d'une orientation de la structure et du navire (A1) l'un par rapport à l'autre,
dans lequel la commande de la position et/ou de l'orientation de la structure et/ou du navire (A1) comprend la commande de la position et/ou de l'orientation de la structure et/ou du navire (A1) sur la base des données de force ; et
dans lequel le procédé comprend en outre :
la détermination d'au moins l'un d'une rigidité et d'un amortissement d'un couplage entre le navire (A1) et la structure lorsqu'il est relié par l'intermédiaire du préhenseur (G) ; et
l'ajustement dynamique de l'au moins un de la rigidité et de l'amortissement du couplage, sur la base des données de force.

2. Procédé selon la revendication 1,
dans lequel la commande de la position et/ou de l'orientation de la structure et/ou du navire (A1) implique une commande par au moins deux boucles de rétroaction imbriquées, dans lequel les au moins deux boucles de rétroaction imbriquées comprennent une boucle de rétroaction interne en tant que première boucle de rétroaction pour ajuster dynamiquement l'au moins un de la rigidité et de l'amortissement du couplage sur la base des données de force, et une boucle de rétroaction externe en tant que deuxième boucle de rétroaction pour une compensation de mouvement, dans lequel la deuxième boucle de rétroaction est configurée pour déterminer une rigidité et/ou un amortissement requis du couplage et fournir des points de consigne à la première boucle de rétroaction sur la base de la rigidité et/ou de l'amortissement requis du couplage, et
dans lequel, facultativement, les au moins deux boucles de rétroaction imbriquées comprennent en outre une troisième boucle de rétroaction pour une commande d'inclinaison de la structure, dans lequel la troisième boucle de rétroaction enferme les première et deuxième boucles de rétroaction.

3. Procédé selon la revendication 1,
dans lequel la commande de la position et/ou de l'orientation de la structure et du navire (A1) comprend la commande d'un actionneur entre le navire (A1) et le préhenseur (G) sur la base des données de force, en particulier la commande de l'actionneur pour commander la position et/ou l'orientation de la structure et du navire (A1), et
dans lequel, facultativement, la commande de l'actionneur comprend la commande d'une force et/ou d'un couple d'un entraînement de l'actionneur et/ou la commande d'une position relative et/ou d'un mouvement de parties mobiles de l'actionneur.

4. Procédé selon l'une quelconque des revendications 1 à 3, comprenant en outre :
la réception de données de structure indicatives d'au moins l'un parmi une position, une orientation et un mouvement de la structure,
dans lequel la commande de la position et/ou de l'orientation de la structure et/ou du navire (A1) comprend également la commande de la position et/ou de l'orientation de la structure et/ou du navire (A1) sur la base des données de structure,
et/ou
dans lequel le procédé comprend en outre :
la réception de données de navire indicatives d'au moins l'un parmi une position, une orientation et un mouvement du navire (A1),
dans lequel la commande de la position et/ou de l'orientation de la structure et/ou du navire (A1) comprend également la commande de la position et/ou de l'orientation de la structure et/ou du navire (A1) sur la base des données de navire,
et/ou
dans lequel le procédé comprend en outre :
la réception de données de structure indicatives d'au moins l'un parmi une position, une orientation et un mouvement de la structure en coordonnées terrestres et/ou par rapport à la formation de fond d'eau dans laquelle la structure doit être placée, et/ou
la réception de données de navire indicatives d'une position et/ou d'un mouvement du navire (A1), en particulier une position et/ou un mouvement du navire (A1) en coordonnées terrestres et/ou par rapport à la formation de fond d'eau dans laquelle la structure doit être placée,
dans lequel la commande d'une position et/ou d'une orientation de la structure et/ou du navire (A1) comprend également la commande de la position et/ou de l'orientation de la structure et/ou du navire par rapport aux coordonnées terrestres et/ou par rapport à la formation de fond d'eau.

5. Procédé selon l'une quelconque des revendications 1 à 4,
comprenant en outre la réception de données de charge, à partir d'un capteur de charge configuré pour détecter une charge sur un système de levage supportant la structure,
dans lequel la commande de la position et/ou de l'orientation de la structure et/ou du navire comprend également la commande de la position et/ou de l'orientation de la structure et/ou du navire sur la base des données de charge.

6. Procédé selon l'une quelconque des revendications 1 à 5, comprenant en outre :
la réception de données de configuration indicatives d'une position relative et/ou d'un mouvement d'une ou plusieurs parties mobiles de l'actionneur, et/ou
la réception de données de navire indicatives d'une position et/ou d'un mouvement du navire, en particulier une position et/ou un mouvement du navire par rapport à la formation de fond d'eau dans laquelle la structure doit être placée,
dans lequel la commande de la position et/ou de l'orientation de la structure et/ou du navire comprend également la commande de la position et/ou de l'orientation de la structure et/ou du navire sur la base des données de configuration et/ou des données de navire,
en particulier dans le cas où les données de configuration sont indicatives de la position relative et/ou du mouvement de parties mobiles de l'actionneur qui sont à l'extérieur d'un espace prédéterminé et/ou d'une plage de vitesse prédéterminée, et/ou
dans le cas où les données de navire sont indicatives du fait que le navire est positionné et/ou se déplace à l'extérieur d'un espace prédéterminé et/ou d'une plage de vitesse prédéterminée.

7. Procédé selon l'une quelconque des revendications 1 à 6, comprenant en outre :
la détermination d'une position sur ou dans la formation de fond d'eau dans laquelle la structure doit être placée, et la commande de la position et/ou de l'orientation de la structure et du navire symétriquement autour de la position ; et/ou
la détermination d'un centre de masse et/ou d'un centre ou d'une inertie d'un ensemble comprenant la structure et le navire reliés par l'intermédiaire du préhenseur, et la commande de la position et/ou de l'orientation de la structure et du navire symétriquement autour du centre de masse et/ou du centre ou de l'inertie.

8. Procédé selon la revendication 1, comprenant :
l'ajustement de la rigidité du couplage d'un premier réglage de rigidité à un second réglage de rigidité, différent, ou du second au premier réglage de rigidité, et/ou
l'ajustement de l'amortissement d'un premier réglage d'amortissement à un second réglage d'amortissement, différent, ou du second au premier réglage d'amortissement, et
dans lequel, facultativement, le procédé comprend en outre :
l'ajustement de la rigidité du couplage à un ou plusieurs réglages de rigidité entre les premier et second réglages de rigidité ; et/ou
l'ajustement de l'amortissement du couplage à un ou plusieurs réglages d'amortissement entre les premier et second réglages d'amortissement.

9. Procédé selon l'une quelconque des revendications 1 à 8, comprenant l'ajustement de l'au moins un de la rigidité et de l'amortissement du couplage sur la base des données de force, et/ou, lorsqu'elles sont reçues, d'une ou plusieurs de données de structure, de données de navire, de données de charge, de données de configuration, et de données d'insertion.

10. Procédé selon l'une quelconque des revendications 1 à 9, comprenant en outre :
la réception d'au moins une de
données de charge indicatives d'une charge sur un système de levage supportant la structure, et
données d'insertion indicatives d'une profondeur d'insertion de la structure dans une formation de fond d'eau et/ou indicatives d'une longueur de la structure faisant saillie de la formation de fond d'eau, et
l'ajustement de la rigidité du couplage et/ou l'ajustement de l'amortissement du couplage sur la base d'au moins une des données de charge et des données d'insertion.

11. Procédé selon l'une quelconque des revendications précédentes, comprenant :
l'agencement du navire dans une masse d'eau,
le support de la structure à partir d'un système de levage du navire,
la liaison de la structure par l'intermédiaire du préhenseur au navire,
le placement de la structure sur et/ou dans la formation de fond d'eau de la masse d'eau,
l'entraînement de la structure dans la formation de fond d'eau, et
la déconnexion de la structure du préhenseur et/ou du navire.

12. Système de commande d'au moins l'une d'une position et d'une orientation d'une structure allongée, le système comprenant :
un préhenseur pouvant être monté ou monté sur un navire pour relier au navire par l'intermédiaire du préhenseur une structure allongée, telle qu'un pieu, en particulier un pieu à placer dans une formation de fond d'eau lorsqu'il est saisi par le préhenseur ;
un ordinateur comprenant un support de stockage lisible par ordinateur ayant un code de programme lisible par ordinateur intégré à celui-ci, et un processeur, de préférence un microprocesseur, couplé au support de stockage lisible par ordinateur, dans lequel en réponse à l'exécution du code de programme lisible par ordinateur, le processeur est configuré pour effectuer des opérations exécutables comprenant :
la réception de données de force à partir d'un capteur de force configuré pour détecter une force d'interaction entre la structure et le préhenseur ;
la commande, sur la base des données de force, d'un système de commande (C) du navire et/ou d'un actionneur entre le navire et le préhenseur pour commander la position et/ou l'orientation de la structure et/ou du navire en particulier la commande de la position et/ou de l'orientation de la structure et du navire l'un par rapport à l'autre ;
la détermination d'au moins l'un d'une rigidité et d'un amortissement d'un couplage entre le navire et la structure, lorsque le préhenseur est monté sur le navire et relie la structure allongée au navire ; et
l'ajustement dynamique de l'au moins un de la rigidité et de l'amortissement du couplage, sur la base des données de force.

13. Navire comprenant le système selon la revendication 12.

14. Produit de programme informatique comprenant des instructions pour amener le système selon l'une quelconque des revendications 12 à 13 à exécuter les étapes de procédé selon l'une quelconque des revendications 1 à 11.

15. Support lisible par ordinateur sur lequel est stocké le produit de programme informatique selon la revendication 14.
